# EUROPÄISCHE PATENTSCHRIFT

(11) **EP 3 313 896 B1**
(45) Veröffentlichungstag und Bekanntmachung des Hinweises auf die Patenterteilung: **31.07.2019**
(21) Anmeldenummer: 16728614.5
(22) Anmeldetag: 03.06.2016
(51) Int. Cl.: C08F 4/10, C08F 4/20, C08F 4/26, C08F 220/34, C08F 222/10

(54) **ALDIMINE UND KETIMINE ALS INITIATOREN IN HÄRTERSYSTEMEN UND ENTSPRECHENDE HARZZUSAMMENSETZUNGEN UNTER ANDEREM FÜR DIE BEFESTIGUNGSTECHNIK**
ALDIMINES AND KETIMINES AS INITIATORS IN HARDENER SYSTEMS AND CORRESPONDING RESIN COMPOSITIONS FOR USES INCLUDING FIXING TECHNOLOGY
ALDIMINES ET CÉTIMINES COMME INITIATEURS DANS DES SYSTÈMES DURCISSEURS ET COMPOSITIONS DE RÉSINE CORRESPONDANTES, NOTAMMENT POUR LA TECHNIQUE DE FIXATION

(30) Priorität: 26.06.2015 DE 102015110283; 23.10.2015 DE 102015118134
(43) Veröffentlichungstag der Anmeldung: 02.05.2018
(73) Patentinhaber: fischerwerke GmbH & Co. KG, 72178 Waldachtal (DE)
(72) Erfinder: VOGEL, Martin, 79286 Glottertal (DE); SCHLENK, Christian, 79211 Denzlingen (DE); WEINELT, Christian, 79331 Teningen (DE); GRÜN, Jürgen, 79268 Bötzingen (DE); STEURER, Paul, 79331 Teningen (DE)
(86) Internationale Anmeldenummer: PCT/EP2016/000927
(87) Internationale Veröffentlichungsnummer: WO 2016/206777

(56) Entgegenhaltungen:
- EP-A1- 2 017 260
- EP-A1- 2 824 117
- WO-A1-99/28352
- WO-A1-2009/137929
- WO-A1-2015/154861
- WO-A2-2013/126745
- DE-A1- 3 940 309

## Beschreibung

Die Erfindung betrifft ein Härtersystem, umfassend (i) mindestens ein Aldehyd und/oder Keton und mindestens ein primäres Amin, (ii) mindestens ein Aldimin oder (iii) mindestens ein Ketimin, oder eine Mischung von zwei oder mehr der Bestandteile (i) bis (iii), und mindestens einen Aktivator (Beschleuniger) in Form eines Metallsalzes als Initiatorsystem für eine radikalisch polymerisierbare Verbindungen beinhaltende Kunstharzzusammensetzung, vorzugsweise geeignet oder eingerichtet für eine Verwendung oder für Verfahren in der chemischen Befestigungstechnik; eine Kunstharzzusammensetzung, die ein derartiges Härtersystem beinhaltet, die Verwendung des Härtersystems bzw. der Kunstharzzusammensetzung, insbesondere im Befestigungsbereich, und damit verbundene weitere Erfindungsgegenstände, wie Verfahren, Methoden und Verwendungen.

Kunstharzzusammensetzungen auf Basis radikalisch polymerisierbarer (härtbarer) Verbindungen, wie ungesättigten Polyesterharzen und Vinylesterharzen, sind als Klebe- und Haftmittel bekannt. Häufig sind dies Zweikomponentensysteme, in denen die Kunstharzmischung und das Härtungsmittel in jeweils getrennten Komponenten enthalten sind. Um derartige (insbesondere bei Umgebungstemperatur härtbare) Kunstharzzusammensetzungen zu härten, werden sogenannte Radikalstarter (Initiatoren) benötigt. In der chemischen Befestigungstechnik haben sich aufgrund ihrer Eigenschaften zwei Initiatorsysteme etabliert. Die DE 3 226 602 A1 beschreibt ein Initiatorsystem, welches Benzoylperoxid als Initiator und eine aminische Verbindung als Beschleuniger umfasst. Die EP 1 586 569 A1 schlägt dagegen eines basierend auf einem Perester als Radikalstarter und einer Metallverbindung als Aktivator vor.

Nachteilig an diesen bekannten Initiatorsystemen ist jedoch die Verwendung von Peroxiden als Radikalstarter. Diese sind thermisch sensibel und reagieren empfindlich auf Verunreinigungen, was zu erheblichen Einschränkungen bei der Formulierung von pastösen Härterzusammensetzungen hinsichtlich Lagertemperatur, Lagerstabilitäten und der Auswahl geeigneter Bestandteile führt. Zur Stabilisierung von Peroxiden sind Phlegmatisierungsmittel, wie Phthalate oder Wasser, zu zugegeben. Als Weichmacher wirkend, beeinträchtigen diese signifikant die mechanische Festigkeit der Kunstharzzusammensetzungen.

Auch aus ökologischen Gründen und weil Peroxide in vielen Ländern ab einer bestimmten Konzentration als sensibilisierend gekennzeichnet werden müssen (z.B. bei Dibenzoylperoxid ab 1 %), ist anzustreben, derartige Initiatoren zu meiden. Ähnliches gilt auch für aminische Beschleuniger, die zum Teil ebenfalls kennzeichnungspflichtig sind.

Aldimine bzw. Ketimine (nachfolgend auch summarisch als Imine bezeichnet, was "Ketimin oder vorzugsweise Aldimin" bedeutet) sind Kondensationsprodukte aus primären Aminen und Aldehyden bzw. Ketonen. Bei Kontakt mit Wasser können derartige Imine zu den entsprechenden Aminen und Aldehyden bzw. Ketonen hydrolysieren. Darum können sie als geschützte Form von Aminen, bzw. von Aldehyden oder Ketonen, verwendet werden. So werden Aldimine oft in der Polyurethanchemie oder Epoxidchemie eingesetzt, wo sie als durch Feuchtigkeit aktivierbare Vernetzer ("blockierte Amine" oder "latente Härter") für Isocyanatgruppen bzw. Epoxygruppen aufweisende Zusammensetzungen dienen und so eine Aushärtung nach dem Prinzip der Polyaddition bewirken. Beispiele für derartige Anwendungen finden sich in EP 1 329 469 A1, EP 1 975 190 A1 und EP 2 017 260.

Imine in radikalisch härtbaren Kunstharzzusammensetzungen werden in US 4 348 506 erwähnt. Hier werden Vinylesterharze mit Peroxiden, vor allem Ketonperoxid, als Initiator und a) mit einem Cobalt-Aldimin-Komplex und/oder b) mit einem Cobaltnaphthenat und einer äquivalenten Menge an Aldimin als Beschleuniger gehärtet. Ein "aktiver" Einsatz der Imine als eigentlicher Radikalstarter (ohne Peroxide) - in Kombination mit Metallaktivatoren - für radikalische Polymerisationen ist hier nicht erwähnt und bisher noch nicht bekannt.

Die EP 2 824 117 A1 beschreibt die Verwendung von Kuper(II)salzen und Stickstoff-enthaltenden Liganden als peroxidfreies Initiatorsystem für radikalisch polymerisierbare Verbindungen. Die Stickstoff-enthaltenden Liganden sind vorzugsweise tertiäre aliphatische Amine mit leicht entfernbaren Wasserstoffatomen am zum Stickstoff stehenden α-Kohlenstoffatom. Als Beispiele nennt die EP 2 824 117 A1 unter anderem N,N,N',N",N"-Pentamethyldiethylentriamin (PMDETA) sowie dessen höhere und niedrigere Homologe. Nachteilig an Reaktionsharz-Zusammensetzungen nach EP 2 824 117 A1 ist, dass sie nur geringe Festigkeiten bzw. Verbundspannungen ermöglichen und teilweise bedenkliche Kennzeichnungen (PMDETA ist mit einem Totenkopf gekennzeichnet) aufweisen.

Somit bestand die Aufgabe, neue Härter- bzw. Harzzusammensetzungen bereit zu stellen, welche die im Stand der Technik beschriebenen Nachteile überwinden, jedoch soweit vorhanden dessen Vorteile (z.B. Tieftemperaturhärtung, Robustheit der Mischungsverhältnisse zwischen Harz und Härter) behalten oder übertreffen und gegebenenfalls weitere Vorteile aufweisen; und geeignete Festigkeiten und die Verwendbarkeit für die eingangs genannten Zwecke ermöglichen, ohne dass sie auf Peroxide als Initiatoren angewiesen sind.

Es wurde nun überraschend gefunden, dass (i) Aldehyde und/oder Ketone gemeinsam mit primären Aminen, (ii) Aldimine und (iii) Ketimine in Kombination mit Metallsalzen als Initiatorsysteme für radikalisch polymerisierbare (härtbare) Verbindungen beinhaltende Kunstharzzusammensetzungen genutzt werden können.

Weiterhin wurde gefunden, dass die erfindungsgemäß verwendbaren Imine, welche - im Unterschied zu den Stickstoff-enthaltenden Liganden der EP 2 824 117 A1 - einen sp²-hybridisierten Stickstoff enthalten, zu besonders leistungsfähigen Härtersystemen führen. Dies äußert sich nicht nur in den verbesserten Festigkeiten bzw. Verbundspannungen, sondern auch in einer breiteren möglichen Auswahl an Metallsalzen zur Nutzung als Beschleuniger, die nicht nur auf Kupfer limitiert ist.

Die Erfindung betrifft vor diesem Hintergrund in einer ersten Erfindungsverkörperung ein Härtersystem für eine Kunstharzzusammensetzung mit radikalisch polymerisierbaren Verbindungen, welches die folgenden Bestandteile beinhaltet:
a) mindestens einen Aktivator in Form eines Metallsalzes und als Radikalstarter
b1) mindestens ein Aldehyd und/oder Keton und mindestens ein primäres Amin, und/oder
b2) mindestens ein Imin, welches ein oder mehrere Imin-Strukturinkremente der Formel (I) beinhaltet: 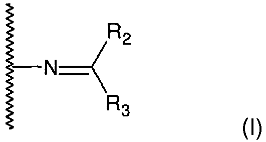 worin unabhängig voneinander:
   die gewellte Linie den organischen Rest des (jeweils) verwendeten Amins darstellt, oder für Wasserstoff steht; und
   R₂ und R₃ unabhängig voneinander Wasserstoff und/oder einen unsubstituierten oder substituierten, gegebenenfalls Doppelbindungen und/oder Heteroatome aufweisenden, ein- oder mehrfach verzweigten oder geradkettigen organischen Rest, welcher mindestens eine aliphatische, heteroaliphatische, alicyclische oder heterocyclische Molekülstruktur, oder eine Kombination von zwei oder mehr der vorgenannten Molekülstrukturen beinhaltet, bedeutet; und/oder Salze davon.

Vorzugsweise liegt das Molekulargewicht der Imin-Strukturinkremente der Formel I beinhaltenden Imine bei 2000 Dalton (g/mol) oder niedriger, beispielsweise bei 1000 Dalton oder niedriger. Auch die Aldehyde und/oder Ketone haben jeweils vorzugsweise Molekulargewichte in diesen Bereichen.

Das genannte Härtersystem kann als fertige Härterzusammensetzung (beispielsweise mit mikroverkapselten Bestandteilen a) und b)) vorliegen oder vorzugsweise erst bei der Mischung mit weiteren Bestandteilen einer Kunstharzzusammensetzung (gewissermaßen als Zusammensetzung (Mischung)) ausgeformt werden, beispielsweise bei der Verwendung.

Eine weitere und besonders hervorzuhebende Ausführungsform der Erfindung betrifft die Verwendung eines derartigen Härtersystems als Initiatorsystem für eine radikalisch polymerisierbare Verbindungen beinhaltende Kunstharzzusammensetzung, die weiter als Bestandteil
c) mindestens eine radikalisch polymerisierbare Verbindung
beinhaltet.

Die radikalisch polymerisierbare Verbindungen beinhaltende Kunstharzzusammensetzung wird dabei insbesondere als Klebstoff, Beschichtungsstoff oder Formmasse, insbesondere zur Befestigung von Verankerungsmitteln in Substraten, wie Mauerwerk oder Beton, oder ferner zur Befestigung von Fasern, Gelegen, Geweben oder Composites zur Verstärkung von Bauwerken, verwendet, so dass insbesondere die (Weiter-)Verwendung des Härtersystems vorzugsweise als Bestandteil einer solchen Kunstharzzusammensetzung wie nachfolgend genannt für die erwähnten Zwecke erfolgt.

Eine weitere Ausführungsform betrifft eine Kunstharzzusammensetzung, beinhaltend die Bestandteile
a) mindestens einen Aktivator in Form eines Metallsalzes und als Radikalstarter
b1) mindestens ein Aldehyd und/oder Keton und mindestens ein primäres Amin, und/oder
b2) mindestens ein Imin, welches mindestens ein Imin-Strukturinkrement der oben gezeigten Formel (I) beinhaltet; und
c) mindestens eine radikalisch polymerisierbare Verbindung.

Vorzugsweise liegt in erfindungsgemäßen Kunstharzzusammensetzungen das Verhältnis der Molmengen (n) von Doppelbindungen zu Carbonyl- (Aldehyd- bzw. Ketogruppen) oder Iminogruppen (n (C=C) : n (N=C) oder n (O=C)) bei 4000 : 1 bis 1 : 10, insbesondere bei 3000 : 1 bis 1 : 2.

Das Verhältnis der Molmengen (n) von Carbonyl- (Aldehyd- bzw. Ketogruppen) oder Iminogruppen zu Metall liegt vorzugsweise bei n (N=C) oder n (O=C) : n (Me) = 1000 : 1 bis 1 : 50, insbesondere von 500 : 1 bis 1 : 10.

In einer weiteren Ausführungsform betrifft die Erfindung auch die Verwendung einer wie eben oder nachfolgend beschrieben zusammengesetzten Kunstharzzusammensetzung als Klebstoff, Beschichtungsstoff oder Formmasse, insbesondere im Befestigungsbereich oder -wesen, hier in erster Linie zur Befestigung von Verankerungsmitteln in (Bau-)Substraten, wie Mauerwerk oder Beton, oder zur Befestigung von Fasern, Gelegen, Geweben oder Composites zur Verstärkung von Bauwerken. Die Verwendung erfolgt insbesondere in Form eines Mehr-, wie Zwei-Komponentenkits, wodurch die reaktiven Bestandteile erst am Ort der Verwendung miteinander in Kontakt treten und reagieren können.

Auch entsprechende Verfahren oder Methoden insbesondere zum Befestigen von Verankerungselementen (Verankerungsmitteln) in Löchern oder Spalten, bei denen eine erfindungsgemäße ein- oder mehrkomponentige Kunstharzzusammensetzung zum Einmörteln (Einkleben) von Verankerungsmitteln verwendet wird, wobei die Kunstharzzusammensetzung und ein Verankerungsmittel nacheinander, insbesondere zuerst die Kunstharzzusammensetzung, dann das Verankerungsmittel, oder (mindestens im wesentlichen) gleichzeitig, in ein Loch oder einen Spalt in einem Substrat (auch in einem gerissenen Substrat, wie in gerissenem Beton) eingebracht werden, oder Mischformen dieser beiden Varianten mit jeweils teilweisem Einbringen, bilden eine Ausführungsform der Erfindung.

Auch entsprechende Verfahren oder Methoden zur Befestigung von Fasern, Gelegen, Geweben oder Composites zur Verstärkung von Bauwerken, bei denen die erfindungsgemäßen ein- oder mehrkomponentigen Kunstharzzusammensetzungen als Befestigungsmittel (Kleber) verwendet werden, sind eine Ausführungsform der Erfindung.

Ausführungsformen der Erfindung finden sich auch in den Ansprüchen, die hier durch Bezugnahme aufgenommen werden, wobei die Unteransprüche bevorzugte Erfindungsverkörperungen bedeuten. Auch die Beispiele betreffen bevorzugte Ausführungsformen.

Vor- und nachstehend können allgemeinere Begriffe oder Merkmale durch jeweils spezifischer (insbesondere nachfolgend) genannte Definitionen einzeln, zu mehreren oder alle ersetzt werden, was zu spezifischen, bevorzugten, Ausführungsformen der Erfindung führt.

Vor- und nachstehend bedeuten Anteils- oder Gehaltsangaben in Prozent jeweils Gewichtsprozent ("Gew.-%") oder den relativen Gewichtsanteil, soweit nicht anders angegeben, bezogen auf alle Inhaltsstoffe einer erfindungsgemäßen Harzzusammensetzung (ohne Verpackungsmaterial), wenn nicht anders angegeben oder ersichtlich.

"Beinhalten" oder "umfassen" bedeutet, dass neben den genannten Bestandteilen oder Komponenten oder Merkmalen noch andere vorhanden sein können, steht also für eine nicht abschließende Aufzählung, im Gegensatz zu "bestehen aus", das eine abschließende Aufzählung der bei seiner Verwendung aufgezählten Bestandteile/Komponenten/Merkmale bedeutet. Vorzugsweise kann anstelle von "beinhalten" ""bestehen aus" eingesetzt werden, insbesondere im Zusammenhang mit dem Begriff "Molekülstruktur(en)".

Wo das Attribut "ferner" erwähnt wird, bedeutet dies, dass Merkmale ohne dieses Attribut stärker bevorzugt sind.

"Und/oder" bedeutet, dass die genannten Merkmale/Substanzen jeweils alleine oder in Kombination von zwei oder mehr der jeweils genannten Merkmale/Substanzen vorliegen können.

Unter "Harzzusammensetzung" ist eine Kunstharzzusammensetzung zu verstehen, der Kürze halber wird der Ausdruck "Harzzusammensetzung" weitgehend verwendet.

Wo "(Meth)acrylate" oder -"(meth)acrylate" erwähnt werden, bedeutet dies Acrylate, Methacrylate oder Mischungen davon.

Alkyl (auch in Alkylen oder Alkyloxy) und/oder aliphatisch bedeutet vorzugsweise eine unverzweigte oder ein- oder mehrfach verzweigte - gegebenenfalls ungesättigte - Kohlenwasserstoffkette mit beispielsweise 12 Kohlenstoffatomen.

Cycloalkyl (auch in Cycloalkylen) und/oder (ali)cyclisch bedeutet vorzugsweise einen cycloaliphatischen Rest mit 3 bis 18, beispielsweise mit 3 bis 8 Kohlenstoffatomen im Ring.

Aryl (auch in Arylen) und/oder aromatisch bedeutet insbesondere Aryl mit 6 bis 22, z.B. mit 6 bis 10 Kohlenstoffatomen, insbesondere Phenyl (oder Phenylen).

Das Präfix "Hetero-" bedeutet vorzugsweise, dass ein oder mehrere Kohlenstoffatome unabhängig voneinander durch Heteroatome, z.B. durch 1 bis 3 Heteroatome (beispielsweise ausgewählt aus O, N, wie NH oder N-Alkyl, S und Si), ersetzt sind.

Aliphatisch-aromatisch bedeutet insbesondere einen Arylalkyl, Arylalkylen, Arylenalkyl oder Alkyl-Arylen-Alkylrest mit Aryl, Alkyl, Alkylen und Arylen wie gerade definiert.

Wo von "substituiert" oder von "Substituent" die Rede ist, bezeichnet dies ein Atom oder eine Atomgruppe (beispielsweise Hydroxy), welche(s) in einem Molekül ein Wasserstoffatom ersetzt. Der und/oder die Substituenten (im Falle von "substituiert) können sich entlang der Hauptkette und/oder bei Verzweigungen entlang der Seitenkette befinden. Entsprechend gekennzeichnete Reste, Inkremente oder Molekülstrukturen können vorzugsweise gesättigt oder unsubstituiert sein.

In allen Ausführungsformen der Erfindung ist vorzugsweise auf jeglichen Zusatz (Beimischen) von Initiatoren aus dem Stand der Technik, insbesondere Peroxiden als solchen, Aziden, Azoverbindungen und Photoinitiatoren als Radikalstarter verzichtet, d.h. die Erfindungsgegenstände kommen ohne solche Verbindungen aus (sie sind frei davon). Dabei ist nicht ausgeschlossen, dass vereinzelt Peroxide während der Lagerung oder der Reaktion beiläufig entstehen (beispielsweise auch durch Umsetzung mit Luftsauerstoff), doch erfolgt kein aktiver Zusatz "von außen".

"Initiatoren" aus dem Stand der Technik sind dabei Radikalstarter, wie erwähnt. Beispiele solcher Peroxide sind Alkylhydroperoxide, Dialkylperoxide, Peracetale, Perketale, Persäuren, Aldehydperoxide und Ketonperoxide; Peroxycarbonate, Peroxyester, Diacylperoxide, und dergleichen mehr, z.B wie in WO 2007/042199 und US 2002/0091214 genannt. Beispiele nicht peroxidischer Verbindungen sind Azoverbindungen wie AIBN und Tetrazene.

Die erfindungsgemäß beinhalteten bzw. verwendeten Aldehyde, Ketone, Amine, Aldimine oder Ketimine sind bekannt oder nach an sich bekannten Verfahren herstellbar/erhältlich bzw. werden vorzugsweise danach erhalten. Die Imine können vor der Anwendung (z.B. zur Befestigung von Verankerungselementen) oder auch erst "in situ" synthetisiert bzw. erhalten werden. Mögliche erfindungsgemäße Verfahren sind also (t) die separate vorherige Herstellung und/oder (tt) die "in situ" Herstellung, bei der der Aldehyd/Keton und das primäre Amin auf unterschiedliche Komponenten des Befestigungssystems aufgeteilt werden und beispielsweise am Ort der Anwendung vermischt werden und/oder (ttt) die "in situ" Herstellung in einer Komponente des Befestigungssystems, bei der der Aldehyd/Keton und das primäre Amin bei der Zubereitung der jeweiligen Komponente gemeinsam vermischt werden. Insbesondere die Imine gemäß (t) werden durch Kondensation unter Abspaltung von Wasser aus ein oder mehreren Aminen mit einem oder mehreren Aldehyden bzw. Ketonen erhalten. Entsprechende Reaktionsbedingungen für die separate vorherige Umsetzung (t) sind dem Fachmann bekannt.

Beispiele für geeignete Amine und Aldehyde oder Ketone finden sich insbesondere in der DE 10 2004 035 542 A1, EP 1 329 469 A1, EP 1 975 190 A1 und der EP 2 017 260, die hier bezüglich der darin allgemein und speziell genannten Amine, Aldehyde, Ketone, Aldimine und Ketimine durch Bezugnahme aufgenommen werden.

Die als solche zugesetzten oder zur Synthese der Imine geeigneten primären Amine umfassen beispielsweise Mono-, Di- oder Polyamine, oder Mischungen von zwei oder mehr davon. Die einsetzbaren Mono-, Di- und/oder Polyamine können sowohl linear als auch verzweigt sein. Das Molekülgerüst der Mono- und/oder Di- und/oder Polyamine kann aliphatische, heteroaliphatische, alicyclische, heterocyclische, aromatische, aliphatischaromatische und Silan/Siloxan-Molekülstrukturen oder zwei oder mehr unabhängig ausgewählte davon enthalten. Im Molekül können primäre und/oder sekundäre und tertiäre Aminogruppen vorhanden sein, jedoch muss mindestens eine primäre Aminogruppe (-NH₂), zur Ausbildung des Aldimins bzw. Ketimins, enthalten sein.

Die Mono-, Di- oder Polyamine sind bevorzugt aus der Gruppe der Alkyl- oder Alkylen(mono oder di)amine (wie z.B.: 2-Methylpentandiamin, oder 2,2,4- oder 2,4,4-Trimethylhexamethylendiamin), der Heteroalkyl- oder Heteroalkylen(mono oder di)amine (wie beispielsweise 1,13-Diamino-4,7,10-trioxatridecan, kommerziell erhältliche aminfunktionalisierte Polyoxyalkylene [Jeffamine] der Firma Huntsman Corp, oder z.B.: Triethylentetramin und/oder höhere Homologe), der Cycloalkyl- oder Cycloalkylen(mono oder di)amine (wie z.B.: Isophorondiamin, 1,3-Bisaminomethylcyclohexan, TCD-Diamin), der Heterocyloalkyl- oder Heterocycloalkylen(mono oder di)amine (wie z.B.: Aminoethylpiperazin), der Aminole bzw. Aminoalkohole (wie z.B. 1,3-Diaminopropan-2-ol), und der aliphatisch-aromatischen(mono oder di)amine (wie 1,3- oder 1,4-Benzoldimethanamin), ausgewählt und/oder aus der Gruppe der aminosilanisierten Füllstoffe.

Weiterhin bevorzugt können die Mono-, Di- oder Polyamine aus der Gruppe der Aminoamide, Polyaminoamide, Mannich-Basen und der Aminaddukte (Epoxid-Amin-Addukte wie beispielsweise in EP 0 387 418 A2 beschrieben, Isocyanat-Amin-Addukte [beispielsweise aus nicht umgesetzten Aminogruppen der Iminsynthese oder aus den oben genannten Aminolen - bei Verwendung der Aminole erfolgt bevorzugt zuerst die Umsetzung zum Imin und im Anschluss die Addition an das Isocyanat], Bucherer-Addukte und Michael-Additions-Addukte) ausgewählt sein.

Als Amine besonders interessant sind auch Aminoalkylsilane, die mindestens eine hydrolysierbare Gruppe, wie Alkoxy, z.B. Methoxy oder Ethoxy - am Silicium gebunden - beinhalten. Diese können (durch entstehendes Reaktionswasser oder zugeführtes Wasser) hydrolysieren und kondensieren und so Oligomere bilden, die mehrere Aminogruppen tragen und die REACH-Definition für Polymere erfüllen. Imine aus derartigen Aminoalkylsilanen bilden daher die Grundlage für besonders bevorzugte Verkörperungen der Erfindung. Bevorzugte derartige Aminoalkylsilane sind beispielsweise ausgewählt aus der Gruppe, die ein oder mehrere der folgenden Verbindungen umfasst: Aminoalkyltri- oder -dialkoxysilane, wie 3-Aminopropyl-trimethoxysilan oder 3-Aminopropyltriethoxysilan, und N-(Aminoalkyl)-amino-alkyltri- oder -dialkoxysilane, wie N-(2-Aminoethyl)-3-aminopropyltrimethoxysilan oder N-(2-Aminoethyl)-3-aminopropylmethyldimethoxysilan, ferner Ureidoalkyltrimethoxysilane, wie 3-Ureidopropyltrimethoxysilan.

In einer weiteren besonderen Ausführungsform der Erfindungsgegenstände können als Polyamine aminosilanisierte Füllstoffe, die primäre Aminogruppen tragen, wie aminosilanbehandeltes Quarzmehl (z.B Silbond AST® der Fa. Quarzwerke GmbH), aminosilanbehandelte Kieselerde (z.B. Aktisil AM® von Hoffmann Mineral), oder aminosilanbehandelte pyrogene Kieselsäuren, vorgesehen und beinhaltet sein.

Bei den als solche zugesetzten oder zur Synthese der Aldimine und/oder Ketimine verwendbaren bzw. geeigneten Aldehyden und Ketonen handelt es sich insbesondere um solche der Formel (II): 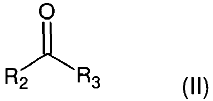 worin:
R₂, R₃ unabhängig voneinander Wasserstoff und/oder einen unsubstituierten oder substituierten und/oder einen gegebenenfalls Doppelbindungen und/oder Heteroatome aufweisenden ein- oder mehrfach verzweigten oder geradkettigen organischen Rest, welcher aliphatische, heteroaliphatische, alicyclische, heterocyclische Molekülstrukturen und/oder Kombinationen aus den vorgenannten Molekülstrukturen umfassen kann, bedeutet.

Bevorzugt handelt es sich bei den Aldehyden und/oder Ketonen um Verbindungen, welche mindestens ein oder mehrere (primäre und/oder sekundäre) Wasserstoffatome am zur Carbonylgruppe stehenden α-Kohlenstoffatom aufweisen. Beispiele derartiger Aldehyde sind Propanal, Valeraldehyd, Isovaleraldehyd, oder Methoxyacetaldehyd, oder 3,7-Dimethyl-6-octenal (Citronellal) oder 3,7-Dimethyl-7-hydroxyoctanal (Hydroxycitronellal). Als derartige Ketone seien hier beispielhaft auch Methylisobutylketon, Aceton, oder Methylethylketon oder 6-Methyl-5-hepten-2-on erwähnt.

Besonders bevorzugt handelt es sich bei den Aldehyden und/oder Ketonen um Verbindungen, welche am zur Carbonylgruppe stehenden α-Kohlenstoffatom eine Doppelbindung und/oder Verzweigung aufweisen. Hierdurch weisen die besonders bevorzugten Aldehyde und/oder Ketone nur noch ein (tertiäres) Wasserstoffatom am zur Carbonylgruppe stehenden α-Kohlenstoffatom auf. Beispiele besonders bevorzugter Aldehyde sind Isobutyraldehyd, 2-Ethylhexanal, 2-Methylbutanal, 2-Ethylbutanal, 2-Methylvaleraldehyd, 2,3-Dimethylvaleraldehyd, Cyclohexylcarboxaldehyd, oder 3,7-Dimethyl-2,6-octadienal (Citral), 3-(4-tert-Butylphenyl)-2-methylpropanal (Lilial, Lysmeral), Tetrahydrofuran-3-carboxaldehyd, Tetrahydro-2-furancarboxaldehyd, 4-Formyltetrahydropyran, Tetrahydro-2H-pyran-2-carbaldehyd oder Tetrahydro-pyran-3-carbaldehyd. Als besonders bevorzugte Ketone seien hier beispielhaft Diisopropylketon, 3-Methyl-2-pentanon, 2-Methylcyclohexanon oder ßlonone genannt.

Die vorgenannten Beispiele für geeignete Amine, bevorzugte und besonders bevorzugte Aldehyde und/oder Ketone sollen den Umfang geeigneter Amine, Aldehyde und/oder Ketone nicht limitieren, sondern lediglich einige Beispielverbindungen mit den oben genannten, als geeignet, bevorzugt und als besonders bevorzugt definierten, Strukturmerkmalen zur Veranschaulichung aufzeigen.

Insbesondere bevorzugt sind auch die in den Beispielen genannten Aldehyde, Ketone bzw. synthetisierten Aldimine und/oder Ketimine und die als solche zugesetzten und/oder zur Synthese der Aldimine und/oder Ketimine verwendeten, spezifischen Amine, Ketone und Aldehyde, oder Gemische von zwei oder mehr davon.

Bei der mindestens einen radikalisch polymerisierbaren Verbindung handelt es sich um eine nichtaromatische ungesättigte Gruppen beinhaltende Verbindung, vorzugsweise um ein radikalisch härtendes ungesättigtes Reaktionsharz mit bevorzugt mindestens 2 oder mehr reaktiven nichtaromatischen ungesättigten Bindungen, oder eine Mischung von zwei oder mehr Reaktionsharzen.

Als radikalisch härtendes Reaktions- oder Kunstharz sind erfindungsgemäß ethylenisch ungesättigte Verbindungen und Verbindungen mit Kohlenstoff-Kohlenstoff-Dreifachbindungen geeignet.

Besonders geeignet ist die Gruppe der ethylenisch ungesättigten Verbindungen, die Styrol und Derivate; Vinylester, wie (Meth)Acrylate, Urethan(meth)acrylate oder Itaconate, oder Epoxy(meth)acrylate; ferner ungesättigte Polyester, Vinylether, Allylether, Dicyclopentadien-Verbindungen und ungesättigte Fette, umfasst.

Besonders bevorzugt sind vor allem ein oder mehrere solche Reaktivharze, die (radikalisch) härtbare Ester mit ein oder mehreren ungesättigten Carbonsäureresten (wie beispielsweise in DE 10 2014 103 923 A1 beschrieben) umfassen; vorzugsweise jeweils propoxylierte oder insbesondere ethoxylierte aromatische Diol-, wie Bisphenol-A-, Bisphenol-F- oder Novolak-(insbesondere di-) (meth)acrylate; Epoxy(meth)acrylate, insbesondere in Form von Umsetzungs-produkten von Di- oder Polyepoxiden, z.B. Bisphenol-A-, Bisphenol-F- oder Novolakdi- und/ oder -poly-glycidylethern, mit ungesättigten Carbonsäuren, z.B. C₂-C₇-Alken-carbonsäuren, wie insbesondere (Meth)acrylsäure; Urethan- und/oder Harnstoff(meth)-acrylate - insbesondere Urethan(meth)acrylate, die z.B. durch Umsetzung von Di- und/oder Polyisocyanaten (höherfunktionelle Isocyanate) mit geeigneten (Meth)Acrylverbindungen (wie z.B.: Hydroxyethyl- oder Hydroxypropylmethacrylat), gegebenenfalls unter Mitwirkung von Hydroxyverbindungen, die mindestens zwei Hydroxylgruppen enthalten, wie sie beispielsweise in der DE 39 40 309 A1 und/oder DE 4111828 A1 beschrieben sind, erhalten werden; oder ungesättigte Polyester¬harze, oder dergleichen, oder zwei oder mehr dieser härtbaren ungesättigten organischen Komponenten.

Der Gewichtsanteil dieses oder dieser Reaktivharze liegt vorzugsweise im Bereich von 0,1 bis 90 Gew.-%, z.B. zwischen 0,5 und 75 Gew.-% oder zwischen 1 und 40 Gew.-% oder insbesondere von 15 bis 60, beispielsweise 20 bis 50 Gew.-%.

Wichtige Beispiele für weitere (insbesondere im Befestigungsbereich übliche) Inhaltsstoffe sind Co-Beschleuniger, Inhibitoren, reaktive Verdünner, Thixotropiermittel, Füllstoffe und/oder weitere Additive.

Als Co-Beschleuniger können aminische Co-Beschleuniger in Frage kommen, wie insbesondere (vorzugsweise tertiäre, insbesondere hydroxyalkylaminogruppensubstituierte) aromatische Amine ausgewählt aus der Gruppe, die epoxyalkylierte Aniline, Toluidine oder Xylidine, wie z.B. ethoxyliertes Toluidin, Anilin oder Xylidin, wie N,N-Bis(hydroxyethyl)-p-toluidin und ganz besonders auch entsprechend höher alkoxylierte technische Produkte, umfasst. Mischungen von zwei oder mehr Co-Beschleunigern, insbesondere der genannten, sind möglich. Der oder die Co-Beschleuniger haben, vorzugsweise einen Anteil (Konzentration) von 0,005 bis 10, insbesondere von 0,1 bis 5 Gew.-%.

Als Inhibitoren können beispielsweise nichtphenolische (anaerobe) und/oder phenolische Inhibitoren zugesetzt werden.

Als phenolische Inhibitoren (die als bereits zugemischter Bestandteil käuflicher radikalisch härtender Reaktionsharze vorgesehen sein, aber ferner auch fehlen können) kommen (ggf. alkylierte) Hydrochinone, wie Hydrochinon, Mono-, Di- oder Trimethylhydrochinon, (ggf alkylierte) Phenole, wie 4,4'-Methylen-bis(2,6-di-tert-butylphenol), 1,3,5-Trimethyl-2,4,6-tris(3,5-di-tert-butyl-4-hydroxybenzyl)-benzol, oder 4-Methoxyphenol, (ggf. alkylierte) Brenzcatechine wie tert.-Butylbrenzcatechin oder 3,5-Di-tert-butyl-1,2-benzoldiol, oder Gemische von zwei oder mehr davon, in Frage. Ihr Anteil liegt vorzugsweise bei bis zu 1 Gew.-%, insbesondere zwischen 0,0001 und 0,5 Gew.-%, z.B. zwischen 0,01 und 0,1 Gew.-%.

Als nicht phenolische oder anaerobe Inhibitoren kommen vorzugsweise Phenothiazine oder andere stabile organische Radikale, wie Galvinoxyl- und N-oxyl-Radikale, in Betracht. Als organische Nitroxylradikale (insbesondere "HALS") können beispielsweise solche aus der DE 199 56 509, insbesondere 1-Oxyl-2,2,6,6-tetra-methylpiperidin-4-ol ("4-OH-TEMPO" oder "TEMPOL") vorgesehen sein. Der Gewichtsanteil der nicht-phenolischen Inhibitoren liegt vorzugsweise, bezogen auf die Reaktionsharzformulierung, im Bereich von 1 ppm (Gew.) bis 2 Gew.-%, insbesondere z.B. im Bereich von 10 ppm (gewichtsbezogen) bis 1 Gew.-%.

Als Thixotropiermittel können übliche thixotropieverursachende Rheologiehilfsmittel verwendet werden, wie pyrogene Kieselsäure, Bentonite, Alkyl- und Methylcellulosen, Rizinusölderivate oder dergleichen, z.B. in einem Gewichtsanteil von 0,01 bis 50 Gew.-%, beispielsweise von 0,1 bis 5 Gew.-%.

Auch weitere Additive können zugesetzt sein, wie Weichmacher, nicht reaktive Verdünnungsmittel, weitere Silane, Flexibilisatoren, Stabilisatoren, Antistatikmittel, Verdickungsmittel, Härtungskatalysatoren, Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon. Solche Additive können z.B. insgesamt in Gewichtsanteilen von insgesamt 0 bis 90 Gew.-%, beispielsweise von 0 bis 40 Gew.-%, zugesetzt sein. Sie können in einzelnen oder mehreren Komponenten bei Mehrkomponentensystemen in dem Fachmann ersichtlicher und bekannter Weise zugesetzt sein.

Als Reaktivverdünner für radikalisch härtende Reaktions- oder Kunstharze können zusätzlich auch ein oder mehrere niedrigviskose radikalisch polymerisierbare Verbindungen zugesetzt sein, wie beispielsweise in EP 1 935 860 A1 und DE 195 31 649 A1 beschrieben. Vorzugsweise enthält das Kunstharz als "reaktive Verdünner" (Meth)acrylsäureester ((Meth)acrylate), der Formel (H₃C oder H)-C(=CH₂)-C(=O)-OX, worin X ein gegebenenfalls substituierter oder mehrfach substituierter Alkylrest ist (einschließlich Hydroxyalkyl(meth)acrylaten, wie (z.B. 2-)Hydroxypropyl(meth)acrylat oder Hydroxyethyl(meth)acrylat), Alkyl(meth)acrylate mit 1 bis 10 (Meth)acrylatgruppen, wie Mono-, Di-, Tri-, Tetra-, Penta-, Hexa- oder poly(meth)acrylate, z.B. Alkyldi- oder tri(meth)acrylate, wie 1,2-Ethandioldi(meth)acrylat, 1,3- oder insbesondere 1,4-Butandioldi(meth)acrylat, Hexandioldi(meth)acrylat, Diethylglykoldi(meth)acrylat, Trimethylolpropantri(meth)acrylat, Glycerintri(meth)acrylat, Polyglycerinpoly(meth)acrylat, Polyethylenglykoldi(meth)acrylat, Cycloalkyl-, Bicycloalkyl- oder Heterocycloalkyl(meth)-acrylate, worin Cycloalkyl oder Bicycloalkyl 5 bis 7 Ringkohlenstoffatome aufweist und Heterocyclyl 5 oder 6 Ringatome hat und 1 oder 2 Ringheteroatome ausgewählt aus N, O und S aufweist, wie Tetrahydrofurfuryl(meth)acrylat oder Isobornyl(meth)acrylat, oder Ace-toacetoxyalkyl(meth)acrylat. Ferner können Styrole, wie Styrol, α-Methylstyrol, Vinyltoluol, tert.-Butylstyrol und/oder Divinylbenzol, oder Gemische von zwei oder mehr davon, als mit dem radikalisch härtenden ungesättigten Reaktionsharz parallel aushärtende Bestandteile vorgesehen sein. Der oder die Reaktivverdünner sind beispielsweise in einem Gewichtsanteil von 0,1 bis 90 Gew.-%, z.B. zwischen 0,5 und 75 Gew.-% oder zwischen 1 und 40 Gew.-% zugesetzt.

Bei den Aktivatoren in Form eines Metallsalzes, was auch Metallkomplexe und Metalloxide einschließt, verwendeten Bestandteile handelt es sich vorzugsweise um ein oder mehrere Metallsalze oder insbesondere um ein oder mehrere Salze von organischen und/oder anorganischen Säuren mit Metallen, z.B. ausgewählt aus Kupfer, Eisen, Vanadium, Mangan, Cer, Kobalt, Zirkonium, oder Wismut, oder Gemischen von zwei oder mehr davon. Insbesondere sind die Metallsalze aus der Gruppe ausgewählt, die aus Vanadium, Eisen, Mangan und Kupfer besteht, insbesondere in Form von Salzen oder Komplexen mit anorganischen Säureresten, wie Sulfat- und/oder Carbonat-Resten und/oder organischen Säureresten, beispielsweise Carboxylatresten, - wobei die organischen Säuren vorzugsweise gesättigt sind - wie Carboxylate mit CH₃, C₂-C₂₀Alkyl, einem C₆-C₂₄-Arylrest oder C₇-C₃₀-Aralkylrest, beispielsweise Oktoat, z.B. 2-Ethylhexanoat (Isooctanoat), Neodecanoat, oder Acetylacetonat. Besonders bevorzugt sind Mangancarboxylate, wie Mn-acetat oder Mn-octoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat, Kupfersulfat und Kupferchlorid umfasst.

Solche Aktivatoren sind bekannt oder nach an sich bekannten Verfahren herstellbar und liegen vorzugsweise in einem Anteil von 0,01 bis 20, z.B. 0,1 bis 5 Gew.-%, vor.

Füllstoffe können in einer oder bei Mehrkomponentenzusammensetzungen in mehreren Komponenten einer erfindungsgemäßen Kunstharzzusammensetzung, beispielsweise in Form eines Mehrkomponentenkits, enthalten sein. Ihr Anteil beträgt vorzugsweise 0 bis 80 Gew.-%, beispielsweise 5 bis 80, z.B. 40 bis 70 Gew.-%.

Als Füllstoffe finden übliche Füllstoffe, z.B. hydraulisch härtbare Füllstoffe, wie Gips, Branntkalk, Wassergläser oder insbesondere Zemente, wie Portlandzement oder Tonerdeschmelzzemente; mineralische oder mineralähnliche Füllstoffe, wie Kreiden, Sand, Gesteinsmehle, Quarz, Glas, Porzellan, Korund, Keramik, Silikate, Tone, Schwerspat, Aluminiumhydroxid, oder dergleichen, die als Pulver, in körniger Form oder in Form von Formkörpern zugesetzt sein können, Verwendung, oder andere, wie beispielsweise in WO 02/079341 und WO 02/079293 genannt (hier diesbezüglich durch Bezugnahme aufgenommen), oder Mischungen von zwei oder mehr davon; wobei die Füllstoffe ferner oder insbesondere auch wie bereits erwähnt oder anderweitig silanisiert sein können.

Als weitere Silane kommen sämtliche monomere Silane und/oder oligomere Siloxane in Betracht, die ein oder mehrere hydrolysierbare Gruppen - am Siliciumatom gebunden - enthalten. Beispielsweise sind dies (Meth)acryloxyalkyltri- oder -dialkoxysilane wie Methacryloxypropyltrimethoxysilan, Vinyltri- oder -dialkoxysilane, wie z.B. Vinyltrimethoxysilan oder Vinyltriethoxysilan, (Cyclo)Alkyltri- oder -dialkoxysilane, wie Methyltrimethoxysilan, (Cyclohexyl)methyldimethoxysilan, Tetraalkoxysilane, wie Tetraethoxysilan, Tetramethoxysilan oder Tetrapropoxysilan oder Alkoxypolysilikate (Ester der (Poly)kieselsäure), wie Ethyl- oder Propylpolysilikat, um nur einige zu nennen. Die weiteren Silane können auch bei der Synthese der Iminosilane (Aldimin und/oder Ketimin aus Aminoalkylsilan und Aldehyd bzw. Keton) zugegen sein, wobei durch das entstehende Reaktionswasser gegebenenfalls Co-Kondensate entstehen.

Wie erwähnt, betrifft eine Ausführungsform der Erfindung die Verwendung eines nach- und vorstehend beschriebenen Härtersystems (mit gegebenenfalls bei Lagerung räumlich getrennten Bestandteilen a) und b1) und/oder b2)) zur Herstellung einer Kunstharzzusammensetzung, insbesondere als Härtersystem eines die erfindungsgemäßen Kunstharzzusammensetzung beinhaltenden Mehrkomponentenkits, bzw. ein entsprechendes Herstellungsverfahren eines solchen Härtersystems, welche das Mischen der Bestandteile a) und b1) und/oder b2) vor Ort, gegebenenfalls in Gegenwart weiterer Inhaltsstoffe und des Bestandteils c), beinhaltet.

Unter einem Mehrkomponentenkit (oder -set) ist insbesondere ein Zweikomponentenkit (vorzugsweise eine Zwei- oder ferner Mehrkammervorrichtung) zu verstehen, worin die miteinander reaktionsfähigen Bestandteile a), b1) und/oder b2) und c) so beinhaltet sind, dass sie während der Lagerung nicht zu unerwünschten Reaktionen führen können, also in räumlich voneinander getrennten Komponenten vorliegen. Möglich sind Patronen. Besonders geeignet sind Kartuschen mit zwei Komponenten, bei denen der Inhalt nach oder unter Vermischen auf die Anwendungsstelle (insbesondere mittels eines Statikmischers) in eine Aussparung, vorzugsweise ein Bohrloch, verbracht wird. Entsprechende Verwendungen sind bevorzugt.

In einer möglichen bevorzugten Variante eines erfindungsgemäßen Mehrkomponentenkits sind die Bestandteile a) und c) in einer Komponente (K1) beinhaltet, während Bestandteil b) (b1 und/oder b2) in einer anderen (im Lagerzustand nicht mischbaren, d.h. separierten) Komponente (K2) beinhaltet ist, wobei jeweils optional ein oder mehrere weitere zusätzliche Inhaltsstoffe vorliegen können.

Im Falle der Verwendung von Radikalstartern b1) (mindestens einem Aldehyd und/oder Keton (Carbonylverbindung) und andererseits mindestens einem primärem Amin) können die Bestandteile Carbonylverbindung und primäres Amin auch in separaten Komponenten (K1) und (K2) vorgesehen sein und so erst beim Mischen bei Verwendung in situ miteinander in Berührung und ggf. zur Reaktion kommen. Bevorzugt ist hierbei die Carbonylverbindung und der Bestandteil c) in einer Komponente (K1) beinhaltet, und das primäre Amin der Radikalstarter b1) zusammen mit dem Bestandteil a) in einer anderen Komponente (K2) enthalten. Ein oder mehrere weitere zusätzliche Inhaltsstoffe können optional vorliegen.

Bestandteil b1) und/oder b2) kann ebenfalls mit Bestandteil c) oder Bestandteil a) in einer Komponente beinhaltet sein, jedoch führt dies nicht zu besonders bevorzugten Ausführungsformen der Erfindung; wobei jeweils optional ein oder mehrere weitere zusätzliche Inhaltsstoffe vorliegen können und/oder notwendig sind.

In einer Ausführungsform der Erfindung kann der Bestandteil c) in beiden Komponenten (K1) und (K2) vorliegen, während dann die Bestandteile a) und b1) und/oder b2) getrennt voneinander (im Lagerzustand nicht mischbar separiert) jeweils zu Bestandteil c) in die einzelnen Komponenten (K1) bzw. (K2) gegeben werden.

Eine Variante der erfindungsgemäßen Verwendung sieht vor, dass die Bestandteile b1) und/oder b2) und c) in ein Bohrloch eingebracht werden, während die Ankerstange oder ferner ein anderes zu verklebendes Material in Bestandteil a) (beispielsweise eine Aktivator-Metallsalzlösung) eingetaucht wird und dann in das mit b1) und/oder b2) und c) versehene Bohrloch eingebracht wird.

Unter Substrat (z.B. für Bohrlöcher) sind z.B. Materialien für Wände, Decken oder Böden im Baubereich zu verstehen, z.B. Mauerwerk, Beton, Holz, Metall oder ferner Kunststoff.

Die nachfolgenden Beispiele illustrieren die Erfindung, ohne ihren Umfang einzuschränken.

In den nachfolgenden Beispielen werden die jeweiligen nicht markierten Bestandteile der Modellformulierungen vorab gemischt. Durch Zugabe und Einmischen des mit "x" markierten Bestandteils wird die Polymerisation ausgelöst.

Die Bestimmungsmethoden für die Ermittlung von Parametern sind auch für den allgemeinen Teil der Beschreibung gültig:

### Bestimmung der Gelzeit

Die Bestimmung der Gelzeit erfolgt manuell mit einer handelsüblichen Stoppuhr und einem handelsüblichen Thermometer bei Raumtemperatur (ca. 23 °C). Hierzu werden alle Bestandteile gemischt und unmittelbar nach dem Mischen die Temperatur der Probe gemessen. Die Probe selbst befindet sich dabei in einem Kunststoffbecher. Die Auswertung erfolgt in Anlehnung an DIN 16945. Die Gelzeit ist die Zeit, bei der die Temperatur über 35 °C steigt. Dies entspricht einem Temperaturanstieg um ca. 10 K.

### Bestimmung der Verarbeitungszeit

Die Bestimmung der Verarbeitungszeit erfolgt in einem Kunststoffbecher bei Raumtemperatur mittels manuellen Umrührens. Beim Erreichen des Gelierpunktes wird die zuvor flüssige Probe hochviskos und gelartig, was sich u.a. durch Klumpenbildung bemerkbar macht. Zu diesem Zeitpunkt wird die nach dem Beginn der Prüfung gestartete Uhr gestoppt. Die Verarbeitungszeit kann direkt abgelesen werden.

### Auszugsversuche aus Beton

Für Auszugsversuche mit Gewindestangen M12 wird, gemäß ETAG 001 PART 5, wie folgt vorgegangen:
Zunächst werden Bohrlöcher (Durchmesser 14 mm; Tiefe 95 mm) in einen horizontal liegenden Betonprüfkörper (Betontyp C20/25) mit einem Bohrhammer eingebracht. Die Bohrlöcher werden mit einem Handausbläser und einer Handbürste gereinigt. Anschließend werden die Bohrlöcher mit der jeweiligen zu prüfenden härtbaren Masse für Befestigungszwecke zu zwei Dritteln befüllt. Je Bohrloch wird eine Gewindestange von Hand eingedrückt. Der Mörtelüberschuss wird mittels eines Spachtels entfernt. Nach 24 Stunden bei Raumtemperatur wird die Gewindestange gezogen bis zum Versagen unter Messung der Versagenslast.

Zur Herstellung der nachfolgenden Beispielformulierungen werden folgende Bestandteile und Abkürzungen verwendet.

**Tabelle 1: Verwendete Bestandteile und Abkürzungen**

| **Abkürzung** | **Bezeichnung** |
|---|---|
| HR | Harzrezeptur |
| IPDA | Isophorondiamin |
| DCH | 1,2-Diaminocyclohexan |
| EDR148 | Jeffamine EDR-148 (Huntsman Corporation, The Woodlands, Texas, USA) |
| D230 | Jeffamine D230 (Huntsman Corporation, The Woodlands, Texas, USA) |
| MXDA | Meta-Xylylendiamin |
| BAC | 1,3-Bis(aminomethyl)cyclohexan |
| DETDA | Diethyltoluoldiamin |
| AM | 3-Aminopropyltrimethoxysilan |
| BDDMA | 1,4-Butandioldimethacrylat |
| HPMA | 2-Hydroxypropylmethacrylat |
| UM | Urethanmethacrylat |
| SR210 | PEG200DMA: Polyethylenglycol-200-dimethacrylat (Sartomer) |
| CN159 | Epoxymethacrylat auf Basis von Bisphenol A (Sartomer) |
| VPLS2142 | CSTICO®phen VP LS 2142 (csc jäklechemie GmbH & Co. KG) |
| SolCop8 | Soligen Copper 8 (Cu-carboxylat, aktiver Inhalt: 7,8 - 8,2%, OMG Borchers GmbH) |
| Iro7/8 | Octa Soligen Iron 7/8 (Eisen-carboxylat, aktiver Inhalt: 7,3 - 7,7%, OMG Borchers GmbH) |
| Mn(III) | Mangan(III)acetat 3%ig in HPMA |
| OxyC | Borchers Oxy Coat (hochaktiviertes Eisen; OMG Borchers GmbH) |
| VP0132 | Borchers VP0132 (Vanadium-carboxylat, aktiver Inhalt: 4,9 - 5,1%, OMG Borchers GmbH) |
| CF31 | Nouryact CF31 (Metallkomplex, Akzo Nobel Functional Chemicals B.V.) |
| SolMn6 | Soligen Manganese 6 (Mangan-naphthenat, aktiver Inhalt: 6%, OMG Borchers GmbH) |
| Mn6 | Octa Soligen Manganese 6 (Mangan-octoat, aktiver Inhalt: 6%, OMG Borchers GmbH) |
| t-BBC | tert-Butylbrenzcatechin |
| t Temp. > 35 °C | Zeit bis zum Überschreiten der Temperatur auf über 35 °C [hh:mm:ss] (= Gelzeit) |
| Tₘₐₓ | maximal erreichte Temperatur [°C] |
| END15 | Umicore Ecos ND15 (Polymer Trockenstoff, aktiver Inhalt: 4%, Umicore Specialty Materials Brugge NV) |
| DCer | Duroct Cerium 6% (Cer-carboxylat, aktiver Inhalt: 6%, DURA Chemicals Inc.) |
| NDryC | Nuodex Dry Coat (hochaktivierter Mangan-Amin-Komplex, aktiver Inhalt: 1%, Rockwood Pigments Durham) |
| CuSO4H2O | Kupfersulfat 15%ig in Wasser |
| CuSO4MEG | Kupfersulfat 5%ig in Monoethylenglykol |
| LS2965 | Desmophen LS 2965 (BayerMaterialScience) |
| Isob | Isobutyraldehyd |
| 2MVal | 2-Methylvaleraldehyd |
| Val | Valeraldehyd |
| MIBK | Methylisobutylketon |
| H18 | Wacker HDK H18 (Synthetische, hydrophobe, amorphe, flammenhydrolytisch hergestellte Kieselsäure) |
| H30RA | Wacker HDK H30RA (aminfunktionalisierte pyrogene Kieselsäure) |

### Beispiel 1: Allgemeine Arbeitsvorschrift I: Alternative Synthese von Aldiminen

In einem Rundkolben wird das entsprechende Amin vorgelegt. Unter kräftigem Rühren wird aus einem Eintropftrichter der Aldehyd langsam zugegeben, wobei sich die Mischung erwärmt. Nach beendeter Zugabe werden die flüchtigen Bestandteile nicht entfernt. Das entstehende Reaktionswasser separiert sich je nach verwendetem Amin ("hydrophobe" Amine) vom Aldimin. Das im Aldimin vorliegende Restwasser stört die Verwendung als Initiator nicht. Unter Verwendung von "hydrophilen" Aminen findet keine Phasenseparation statt. Wahlweise kann auch der Aldehyd vorgelegt und das Amin zugetropft werden. Die Umsetzung (Freiheit von durch IR-Spektroskopie nachweisbaren Imingruppen) wird mittels FT-IR überprüft.

### Beispiel 2: Beispielrezeptur für ein Aldimin aus Isobutyraldehyd und Jeffamin D230

Die Rezeptur für ein nach Beispiel 1 (Allgemeine Arbeitsvorschrift I) herstellbares bzw. hergestelltes Aldimin lautet:

**Tabelle 2: Rezept Aldimin aus Isobutyraldehyd und Jeffamin D230**

| **Rohstoff** | **m [g]** | **M [g/mol]** | **n [mol]** | **Gew.%** |
|---|---|---|---|---|
| Isobutyraldehyd | 15,00 | 72,11 | 0,208 | 38,54 |
| D230 | 23,92 | 230,00 | 0,104 | 61,46 |
| Summe | 38,92 | | | 100,00 |

Das entstehende Reaktionswasser separiert sich langsam vom Aldimin und sammelt sich am Kolbenboden.

Die nachfolgend verwendeten Aldimine werden analog der allgemeinen Arbeitsvorschrift I hergestellt, oder sind kommerziell verfügbar.

### Beispiel 3: Vereinfachte Harzrezepturen

Folgende Rohstoffe werden für die vereinfachten Harzrezepturen vermischt:

**Tabelle 3: vereinfachte Harzrezeptur I (HRI)**

| **Rohstoff** | **Gew.%** |
|---|---|
| Ethoxyliertes Bisphenol-A-Dimethacrylat* | 88,76 |
| BDDMA | 7,14 |
| HPMA | 4,10 |

| | |
|---|---|
| *technisches Produkt - verschiedene Ethoxylierungsgrade möglich. | |

**Tabelle 4: vereinfachte Harzrezeptur II (HRII)**

| **Rohstoff** | **Gew.%** |
|---|---|
| UM-Harz | 54,86 |
| BDDMA | 40,00 |
| HPMA | 5,00 |
| Additive | 0,14 |

Die Herstellung des UM-Harzes erfolgt in dem Fachmann bekannter Art und Weise. Es sei hier beispielhaft auf das Patent DE 4111828 A1 verwiesen. Als Isocyanat wird ein polymeres Diphenylmethandiisocyanat mit Isomeren und höheren Homologen verwendet.

**Tabelle 5: vereinfachte Harzrezeptur III (HRIII)**

| **Rohstoff** | **Gew.%** |
|---|---|
| Ethoxyliertes Bisphenol-A-Dimethacrylat* | 80,00 |
| SR210 | 20,00 |

| | |
|---|---|
| *technisches Produkt - verschiedene Ethoxylierungsgrade möglich. | |

Die vereinfachte Harzrezeptur III ist vor allem interessant zur Herstellung kennzeichnungsfreier Reaktionsharze bzw. Befestigungssysteme und stellen besonders bevorzugte Ausführungen der Erfindung dar.

### Beispiel 4: Bestimmung der Gelzeiten mit VPLS2142 als Radikalstarter b2)

Um die Anwendbarkeit des Härtersystems Imin-Metallsalz auf kalthärtende Vinylesterharze zu beurteilen, werden Beispielformulierungen mit der oben beschriebenen Harzrezeptur I und verschiedenen Metallsalzen erstellt. Als Radikalstarter wird ein Imin aus Isobutyraldehyd und Isophorondiamin eingesetzt (CSTICO®phen VP LS 2142). In der folgenden Tabelle 6 sind die Gelzeiten und die maximal erreichten Temperaturen während den Polymerisationen aufgelistet:

**Tabelle 6: Gelzeiten der Initiatorsysteme aus VPLS2142 und variierenden Metallsalzen**

| **Bezeichnung** | **HRI [g]** | **VPLS21 42 [g]** | **Metallsalz [g]** | **Summe [g]** | **Metall** | **t Temp. > 35 °C [hh:mm:ss]** | **Tₘₐₓ [°C]** |
|---|---|---|---|---|---|---|---|
| VPLS2142-004 | 9,75 | 0,25^{X} | 0,10 | 10,10 | SolCop8 | 00:00:57 | 89,1 |
| VPLS2142-006 | 9,75 | 0,25^{X} | 0,10 | 10,10 | Mn(III) | 00:02:06 | 74,9 |
| VPLS2142-007 | 9,75 | 0,25^{X} | 0,10 | 10,10 | OxyC | 00:02:17 | 71,0 |
| VPLS2142-008 | 9,75 | 0,25^{X} | 0,10 | 10,10 | VP0132 | 00:00:20 | 100,0 |
| VPLS2142-010 | 9,75 | 0,25^{X} | 0,10 | 10,10 | CF31 | 00:01:23 | 88,7 |
| Vgl-Bsp-01 | 9,75 | 0,25 | - | 10,00 | - | > 04:00:00 | - |
| Vgl-Bsp-02 | 9,75 | - | 0,10 | 9,85 | SolCop8 | > 18:00:00 | - |

| | | | | | | | |
|---|---|---|---|---|---|---|---|
| ^{X} als Härter zugegeben | | | | | | | |

Anhand Tabelle 6 wird ersichtlich, dass mit den Beispielformulierungen exotherme und teilweise schnelle Polymerisationen von Vinylesterharzen bei Raumtemperatur erreicht werden. Außerdem zeigt die Tabelle 6, dass das Härtersystem Imin-Metallsalz mit sämtlichen Metallen funktioniert. Die nicht erfindungsgemäßen Vergleichs-Beispiele Vgl-Bsp-01 und Vgl-Bsp-02 zeigen, dass ohne das Vorhandensein des Bestandteils a) bzw. b2) keine effektiven Polymerisationen ausgelöst werden.

### Beispiel 5: Bestimmung der Verarbeitungszeiten mit VPLS2142 als Initiator b2)

Die Tabelle 7 zeigt die Verarbeitungszeiten des Initiatorsystems bestehend aus CSTICO®phen VP LS 2142 in Kombination mit Octa Soligen Manganese 6 bei unterschiedlichen Initiator- und Metallsalzgehalten:

**Tabelle 7: Verarbeitungszeiten der Initiatorsysteme aus VPLS2142 und Mn6.**

| **Bezeichnung** | **HRI [g]** | **VPLS21 42 [g]** | **Mn6 [g]** | **Summe [g]** | **t_{Verzeit} (hh:mm:ss]** | **n (C=C) : n (N=C)** | **n (N=C) : n (Mn)** |
|---|---|---|---|---|---|---|---|
| VPLS2142-013 | 9,75 | 0,10 | 0,10^{X} | 9,95 | 00:01:14 | 74 | 6 |
| VPLS2142-015 | 9,75 | 0,50 | 0,10^{X} | 10,35 | 00:00:34 | 15 | 29 |
| VPLS2142-017 | 9,75 | 0,10 | 0,02^{X} | 9,87 | 00:01:54 | 74 | 29 |
| VPLS2142-018 | 9,75 | 0,05 | 0,01^{X} | 9,81 | 00:03:22 | 147 | 29 |
| VPLS2142-020 | 9,75 | 0,10 | 0,20^{X} | 10,05 | 00:01 :04 | 74 | 3 |
| VPLS2142-021 | 9,75 | 0,25 | 0,10^{X} | 10,20*¹ | 00:08:15 | | |
| VPLS2142-023 | 9,75 | 7,37 | 0,10^{X} | 17,22 | 00:00:20 | 1 | 430 |
| VPLS2142-026 | 9,75 | 0,0025*² | 0,10^{X} | 10,10 | 00:56:30 | 2950 | 0,15 |

| | | | | | | | |
|---|---|---|---|---|---|---|---|
| als Härter zugegeben *¹ zusätzlich 0,1 g t-BBC 10%ig in BDDMA eingewogen. *² 0,25 g einer 1%igen Lösung von VPLS2142 in BDDMA eingewogen. | | | | | | | |

Die Modellmischungen aus Tabelle 7 zeigen, dass sowohl der Initiator b2) als auch das Metallsalz in weiten Bereichen variiert werden können (siehe hierzu auch die molaren Verhältnisse n (C=C) : n (N=C) (Imin-Inkrement) und n (N=C) : n (Metall). Der Einsatz eines aeroben Inhibitors und dessen verzögernde Wirkung wird anhand der Modellmischung VPLS2142-021 gezeigt.

### Beispiel 6: Bestimmung der Gelzeiten mit SolCop8 bzw. SolMn6 und variierenden Aldiminen als Radikalstarter b2) - Variation der Amine und der Aldehyde

Die nachfolgenden Tabellen 8a und 8b illustrieren die Gelzeiten und die maximal erreichten Temperaturen während den Polymerisationen der Härtersysteme bestehend aus Soligen Copper 8 bzw. Soligen Manganese 6 und unterschiedlichen Iminen:

**Tabelle 8a: Gelzeiten der Initiatorsysteme aus SolCop8 und verschiedenen Aldiminen (hergestellt jeweils aus Isobutyraldehyd und variierenden Aminen)**

| **Bezeichnung** | **HRI [g]** | **Aldimin [g]** | **SolCop8 [g]** | **Summe [g]** | **Amin** | **t Temp. > 35 °C [hh:mm:ss]** | **Tₘₐₓ [°C]** |
|---|---|---|---|---|---|---|---|
| Isob-MXDA | 9,75 | 0,25^{X} | 0,10 | 10,10 | MXDA | 00:00:52 | 87,6 |
| Isob-BAC | 9,75 | 0,25^{X} | 0,10 | 10,10 | 1,3-BAC | 00:00:46 | 95,9 |
| Isob-EDR148 | 9,75 | 0,25^{X} | 0,10 | 10,10 | EDR148 | 00:01:17 | 97,0 |
| Isob-DCH | 9,75 | 0,25^{X} | 0,10 | 10,10 | DCH | 00:01:13 | 93,2 |
| Isob-DETDA | 9,75 | 0,25^{X} | 0,10 | 10,10 | DETDA | 00:20:07 | 39,6 |

| | | | | | | | |
|---|---|---|---|---|---|---|---|
| ^{X} als Härter zugegeben | | | | | | | |

**Tabelle 8b: Gelzeiten der Initiatorsysteme aus SolMn6 und verschiedenen Aldiminen (hergestellt jeweils aus Jeffamine D230 und variierenden Aldehyden).**

| **Bezeichnung** | **HRI [g]** | **Aldimin [g]** | **SolMn6 [g]** | **Summe [g]** | **Aldehyd / Keton** | **t Temp. > 35 °C [hh:mm:ss]** | **Tₘₐₓ [°C]** |
|---|---|---|---|---|---|---|---|
| Isob-D230-005 | 9,75 | 0,25^{X} | 0,10 | 10,10 | Isob | 00:01:47 | 96,6 |
| 2MVal-D230 | 9,75 | 0,25^{X} | 0,10 | 10,10 | 2MVal | 00:01:43 | 94,8 |
| Val-D230 | 9,75 | 0,25^{X} | 0,10 | 10,10 | Val | 00:12:25 | 42,8 |
| LS2965 | 9,75 | 0,25^{X} | 0,10 | 10,10 | MIBK | -* | -* |

| | | | | | | | |
|---|---|---|---|---|---|---|---|
| ^{X} als Härter zugegeben *am nächsten Tag durchgehärtet | | | | | | | |

Die Tabellen 8a und 8b zeigen deutlich, dass sich die Vinylesterharzformulierung mit den unterschiedlichsten Radikalstartern b2) sehr gut polymerisieren lässt. Außerdem soll die Tabelle 8a unterstreichen, dass für die Herstellung der Imine alle Arten an primären Aminen verwendet werden können, ohne einen Verlust bzw. eine Verschlechterung der polymerisationsauslösenden Wirkung zu erleiden. Aus Tabelle 8b wird ersichtlich, dass die - zur Iminsynthese - besonders bevorzugten Aldehyde deutlich schneller und mit größerer Exothermie polymerisieren. Die Tabelle 8a verdeutlicht weiterhin, dass evtl. vorhandenes (Rest-)Reaktionswasser (z.B. Isob-DCH) oder sogar homogen verteiltes Reaktionswasser (z.B. Isob-EDR148) keinen Einfluss auf die Polymerisation ausübt.

### Beispiel 7: Bestimmung der Gelzeiten mit dem Aldimin Isob-AM als Initiator b2)

Das Aldimin Isob-AM wird aus den beiden Edukten Isobutyraldehyd und 3-Aminopropyltrimethoxysilan hergestellt. Silane sind reaktiv gegenüber Wasser und reagieren damit unter Hydrolyse und Kondensation. Aufgrund dieser Tatsache erfolgt bei der Aldiminsynthese durch das Reaktionswasser in situ eine Oligomerisierung der Silaneinheiten. Hierdurch ist es möglich, REACH-polymere Initiatoren zu generieren. Die Tabelle 9 weist die Gelzeiten und die zugehörigen maximal erreichten Temperaturen der Härtersysteme Isob-AM mit variierenden Metallsalzen auf.

**Tabelle 9: Gelzeiten der Initiatorsysteme aus Isob-AM und variierenden Metallsalzen**

| **Bezeichnung** | **HRI [g]** | **Isob-AM [g]** | **Metallsalz [g]** | **Summe [g]** | **Metall** | **t Temp. > 35 °C [hh:mm:ss]** | **Tₘₐₓ [°C]** |
|---|---|---|---|---|---|---|---|
| Isob-AM-001 | 9,75 | 0,25 | 0,10^{X} | 10,10 | SolCop8 | 00:01:00 | 95,1 |
| Isob-AM-003 | 9,75 | 0,25 | 0,10^{X} | 10,10 | OxyC | 00:01:36 | 80,1 |
| Isob-AM-004 | 9,75 | 0,25 | 0,10^{X} | 10,10 | VP0132 | 00:00:18 | 86,7 |
| Isob-AM-010 | 9,75 | 0,25 | 0,10^{X} | 10,10 | CF31 | 00:00:58 | 90,5 |
| Isob-AM-014 | 9,75 | 0,25 | 0,10^{X} | 10,10 | END15 | 00:01:53 | 85,3 |
| Isob-AM-021 | 9,75 | 0,25 | 0,10^{X} | 10,10 | DCer | 00:07:16 | 74,4 |
| Isob-AM-029 | 9,75 | 0,25 | 0,10^{X} | 10,10 | NDryC | 00:02:13 | 84,8 |

| | | | | | | | |
|---|---|---|---|---|---|---|---|
| ^{X} als Härter zugegeben | | | | | | | |

Auch aus den Modellformulierungen der Tabelle 9 wird ersichtlich, dass eine exotherme und teilweise schnelle Polymerisation von Methacrylaten bei Raumtemperatur mit unterschiedlichen Metallsalzen erreicht werden kann. Des Weiteren soll die Tabelle 9 hervorheben, dass nicht nur monomere Initiatoren, sondern auch oligomere bis hin zu polymere (REACH-Polymere) Initiatoren verwendet werden können. Die Modellmischung Isob-AM-029 ist besonders interessant für Lackanwendungen, da der hier verwendete Aktivator im Harz keine Eigenfarbe aufweist, also farblos erscheint.

### Beispiel 8: Auszuasversuche aus Beton mit Radikalstartern b2)

Gemäß den vorgenannten Parametern für "Auszugsversuche aus Beton" werden Setzversuche durchgeführt.

**Tabelle 10: Rezepturen zur Durchführung von Setzversuchen und ermittelte Verbundspannungen mit Radikalstartern b2)**

| **Bezeichnung** | **SV-Isob-MXDA-001** | **SV-Isob-D230-001** | **SV-Isob-AM-001** | **SV-VPLS2142-016** |
|---|---|---|---|---|
| HRI [g] | 29,13 | 28,85 | 29,13 | 29,07 |
| Aldimin [g] | 0,75 | 1,48 | 0,75 | 0,75 |
| Metallsalz [g] | 0,30^{X} SolCop8 | 0,30^{X} Iro7/8 | 0,30^{X} OxyC | 0,47^{X} CuSO₄ |
| Sand [g] | 44,82 | 44,38 | 44,82 | 44,72 |
| Summe [g] | 75,00 | 75,00 | 75,00 | 75,00 |
| Verbundspannung [N/mm²] | 20,1 | 17,1 | 19,5 | 17,9 |

| | | | | |
|---|---|---|---|---|
| ^{X} als Härter zugegeben | | | | |

Die Edukte der Aldimine können anhand der verwendeten Abkürzungen in den Bezeichnungen und der oben aufgeführten Tabelle 1 für Abkürzungen entsprechend zugeordnet werden. Die Tabelle 10 belegt, dass das erfindungsgemäße Härtersystem sehr leistungsfähig ist, und zeigt außerdem das enorme Potential derartiger Initiatorsysteme auf.

### Beispiel 9: Bestimmung der Gelzeiten mit Radikalstartern b1) und variierenden Metallsalzen

Um die Anwendbarkeit von Radikalstartern b1) in Kombination mit Metallsalzen zu demonstrieren, werden Beispielformulierungen mit der oben beschriebenen Harzrezeptur I (HRI) und unterschiedlichen Metallsalzen hergestellt Die nachfolgende Tabelle 11 zeigt die Gelzeiten und die maximal erreichten Temperaturen während den Aushärtereaktionen.

**Tabelle 11: Gelzeiten der Härtersysteme bestehend aus Isob und D230 in Kombination mit unterschiedlichen Metallsalzen.**

| **Bezeichnung** | **HRI [g]** | **D230 [g]** | **Metall [g]** | **Isob [g]** | **Summe [g]** | **Metal** | **t Temp. > 35 °C [hh:mm:ss]** | **Tₘₐₓ [°C]** |
|---|---|---|---|---|---|---|---|---|
| Verf-Metalle-001 | 9,75 | 0,24 | 0,10 | 0,15^{X} | 10,24 | SolCop8 | 00:02:35 | 99,6 |
| Verf-Metalle-002 | 9,75 | 0,24 | 0,10 | 0,15^{X} | 10,24 | I ro7/8 | 00:07:16 | 69,6 |
| Verf-Metalle-003 | 9,75 | 0,24 | 0,10 | 0,15^{X} | 10,24 | OxyC | 00:02:56 | 71,1 |
| Verf-Metalle-004 | 9,75 | 0,24 | 0,10 | 0,15^{X} | 10,24 | VP0132 | 00:00:52 | 82,4 |
| Verf-Metalle-005 | 9,75 | 0,24 | 0,10 | 0,15^{X} | 10,24 | SolMn6 | 00:03:30 | 92,3 |
| Verf-Metalle-011 | 9,75 | 0,24 | 0,10 | 0,15^{X} | 10,24 | END15 | 00:13:16 | 83,2 |
| Verf-Metalle-015 | 9,75 | 0,24 | 0,10 | 0,15^{X} | 10,24 | CuSO4 H2O | 00:05:14 | 84,6 |
| Verf-Metalle-016 | 9,75 | 0,24 | 0,10 | 0,15^{X} | 10,24 | CuSO4 MEG | 00:05:06 | 92,8 |

| | | | | | | | | |
|---|---|---|---|---|---|---|---|---|
| ^{X} als Härter zugegeben | | | | | | | | |

Die Tabelle 11 verdeutlicht, dass auch die erfindungsgemäßen Radikalstarter b1) in Kombination mit Metallsalzen Polymerisationen von ungesättigten Reaktionsharzen bei Raumtemperatur auslösen. Weiterhin wird aus den Modellformulierungen ersichtlich, dass hierfür sämtliche Metallsalze eingesetzt werden können. Der mögliche Einsatz und die Funktionsfähigkeit von Metallsalzen anorganischer bzw. organischer Säuren wird in den Formulierungen Verf-Metalle-001 (Metallsalz organischer Säuren) bzw. Verf-Metalle-015 und Verf-Metalle-016 (Metallsalz anorganischer Säuren) gezeigt.

### Beispiel 10: Bestimmung der Gelzeiten mit Radikalstartern b1) und SolMn6/SolCop8 als Metallsalze

Die nachfolgende Tabelle 12 illustriert die Gelzeiten und die maximal erreichten Temperaturen der erfindungsgemäßen Radikalstarter b1) unter Verwendung unterschiedlicher Amine und Aldehyde.

**Tabelle 12: Gelzeiten der Radikalstarter b1) mit variierenden Aminen und Aldehyden**

| **Bezeichnung** | **HRI [g]** | **Aldehyd [g]** | **Metall [g]** | **Amin [g]** | **Summe [g]** | **Amin / Aldehyd** | **t Temp. > 35 °C [hh:mm:ss]** | **Tₘₐₓ [°C]** |
|---|---|---|---|---|---|---|---|---|
| Verf-Amine-001 | 9,75 | 0,15 | 0,10 SolMn6 | 0,37^{X} | 10,37 | AMMO / Isob | 00:01:50 | 89,4 |
| Verf-Amine-002 | 9,75 | 0,15 | 0,10 SolMn6 | 0,14^{X} | 10,14 | MXDA / Isob | 00:03:27 | 68,2 |
| Verf-Amine-004 | 9,75 | 0,15 | 0,10 SolMn6 | 0,15^{X} | 10,15 | BAC/ Isob | 00:03:37 | 91,3 |
| Verf-Ald-001 | 9,75 | 0,15^{X} | 0,10 SolCop8 | 0,24 | 10,24 | D230/ Isob | 00:02:12 | 104,8 |
| Verf-Ald-002 | 9,75 | 0,21^{X} | 0,10 SolCop8 | 0,24 | 10,30 | D230 / 2MVal | 00:03:35 | 94,4 |
| Vgl-Bsp-03 | 9,75 | 0,15 | 0,10 SolCop8 | - | 10,00 | - / Isob | > 18:00:00 | - |
| Vgl-Bsp-04 | 9,75 | 0,15 | - | 0,24 | 10,14 | D230 / Isob | > 04:00:00 | - |
| Vgl-Bsp-05 | 9,75 | - | 0,10 SolCop8 | 0,24 | 10,09 | D230/- | > 18:00:00 | - |

| | | | | | | | | |
|---|---|---|---|---|---|---|---|---|
| ^{X} als Härter zugegeben | | | | | | | | |

Die Tabelle 12 zeigt, dass als erfindungsgemäße Radikalstarter b1) nicht nur diverse primäre Amine, sondern auch diverse Aldehyde eingesetzt werden können. Belegt wird dies durch die schnellen und exothermen Polymerisationen. Die nicht erfindungsgemäßen Vergleichs-Beispiele Vgl-Bsp-03 bis Vgl-Bsp-05 verdeutlichen, dass bei Fehlen eines Bestandteils der erfindungsgemäßen Härtersysteme keine effizienten Polymerisationen stattfinden.

### Beispiel 11: Bestimmung der Gelzeiten mit Radikalstartern b1) unter Verwendung von aminfunktionalisierten Füllstoffen

Die mögliche Verwendung von aminfunktionalisierten bzw. aminsilanisierten Füllstoffen als Polyamine in Radikalstartern b1) soll die nachfolgende Tabelle 13 verdeutlichen.

**Tabelle 13: Gelzeiten der Radikalstarter b1) mit aminfunktionalisierten Füllstoffen als Polyamine**

| **Bezeich -nung** | **HRI [g]** | **H30RA [g]** | **Metall [g]** | **Isob [g]** | **Summe [g]** | **Metall** | **t Temp. > 35 °C [hh:mm:ss]** | **Tₘₐₓ [°C]** |
|---|---|---|---|---|---|---|---|---|
| H30RA-06 | 9,75 | 1,16 | 0,10 | 0,03^{X} | 11,04 | SolCop8 | 00:06:26 | 78,9 |
| H30RA-07 | 9,75 | 1,16 | 0,10 | 0,03^{X} | 11,04 | CuSO4 MEG | 00:08:44 | 72,1 |
| H30RA-08 | 9,75 | 1,16 | 0,10 | 0,03^{X} | 11,04 | OxyC | 00:05:41 | 61,1 |

| | | | | | | | | |
|---|---|---|---|---|---|---|---|---|
| ^{X} als Härter zugegeben | | | | | | | | |

Die verwendete aminfunktionalisierte Kieselsäure hat einen ungefähren Stickstoffgehalt von 0,5%. Die Tabelle 13 belegt, dass auch aminfunktionalisierte Füllstoffe als Polyamine für Radikalstarter b1) verwendet werden können und sich das Reaktionsharz damit sehr gut polymerisieren lässt.

### Beispiel 12: Auszuasversuche aus Beton mit Radikalstartern b1)

Um auch das Leistungspotential der Radikalstarter b1) möglichst anwendungsnah zu zeigen, werden gemäß den vorgenannten Parametern für "Auszugsversuche aus Beton" Setzversuche durchgeführt.

**Tabelle 14: Rezepturen zur Durchführung von Setzversuchen und ermittelte Verbundspannungen mit Radikalstartern b1).**

| **Bezeichnung** | **SV-Verf-01** | **SV-Verf-02** | **SV-Verf-03** | **SV-Verf-04** | **SV-Verf-05** | **SV-Verf-06** | **SV-Verf-08** | **SV-Verf-16** |
|---|---|---|---|---|---|---|---|---|
| HRI bzw. II | 28,97 | 28,97 | 28,97 | 28,97 | 28,97 | 28,91 | 28,82 | 28,97 |
| Isob [g] | 0,45 | 0,45 | 0,45^{X} | 0,45^{X} | 0,45 | 0,59 | 0,44 | 1,34 |
| SolCop8 [g] | 0,30 | 0,30 | 0,30 | 0,30 | 0,30^{X} | 0,30^{X} | 0,30^{X} | 0,30^{X} |
| Sand [g] | 44,57 | 44,57 | 44,57 | 44,57 | 44,57 | 44,48 | 44,34 | 42,25 |
| D230 [g] | 0,71^{X} | 0,71^{X} | 0,71 | 0,71 | 0,71^{X} | 0,71^{X} | 1,09^{X} | 2,14^{X} |
| Summe [g] | 75,00 | 75,00 | 75,00 | 75,00 | 75,00 | 75,00 | 75,00 | 75,00 |
| Verbundspannung [N/mm²] | 18,6 | 16,1 | 17,5 | 14,1 | 17,2 | 13,9 | 17,1 | 22,0 |

| | | | | | | | | |
|---|---|---|---|---|---|---|---|---|
| die mit gekennzeichneten Rohstoffe werden als Härter bzw. Härterformulierung zugegeben. | | | | | | | | |

In den Rezepturen SV-Verf-02 und SV-Verf-04 wird anstatt der vereinfachten Harzrezeptur I (HRI), die Harzrezeptur II (HRII) auf Urethanmethacrylatbasis gemäß Beispiel 3 verwendet. In der Formulierung SV-Verf-06 wird 2-Methylvaleraldehyd anstatt Isobutyraldehyd eingesetzt. Das Metallsalz SolCop8 und das Amin D230 wird in der Formulierung SV-Verf-08 durch OxyC und AM getauscht. Die Tabelle 14 belegt, dass auch die Radikalstarter b1) in Kombination mit Metallsalzen leistungsfähige Härtersysteme für ungesättigte Reaktionsharze bilden und geeignete Verbundspannungen erzielen. Die Rezepturen SV-Verf-01 und SV-Verf-02 zeigen, dass auch unterschiedliche Basisharze mit dem erfindungsgemäßen Initiatorsystem gehärtet werden können. Des Weiteren wird in den Rezepturen SV-Verf-01, SV-Verf-03 und SV-Verf-05 ersichtlich, dass die Bestandteile der Radikalstarter b1) bzw. der erfindungsgemäßen Härtersysteme jeweils als Härter bzw. Härterformulierungen genutzt werden können und so diverse Aufteilungen auf unterschiedliche Komponenten möglich sind.

### Beispiel 13: Gelzeiten der Radikalstarter b1) und b2) unter Verwendung kennzeichnungsfreier Reaktionsharze

Kennzeichnungsfreie Reaktionsharze bzw. Befestigungssysteme spielen eine zunehmende Rolle im Bereich der chemischen Befestigungstechnik. Hier zeigen die erfindungsgemäßen Initiatorsysteme große Vorteile gegenüber dem bisherigen Stand der Technik und ermöglichen erst die Formulierung von kennzeichnungsfreien mehrkomponentigen Reaktionsharzsystemen. Die Tabelle 15 zeigt die Gelzeiten und die maximal erreichten Temperaturen während der durch die erfindungsgemäßen Radikalstarter b1) und b2) ausgelösten Polymerisationen von kennzeichnungsfreien Reaktionsharzformulierungen.

**Tabelle 15: Gelzeiten der Radikalstarter b1) und b2) in kennzeichnungsfreien Reaktionsharzen**

| **Bezeichnung** | **KFR-01** | **KFR-06** | **KFR-03** | **KFR-04** | **KFR-05** |
|---|---|---|---|---|---|
| HRIII [g] | 9,85 | 9,95 | 9,75 | 9,75 | 9,85 |
| VPLS2142 [g] | 0,10^{X} | 0,10^{X} | - | - | 0,10^{X} |
| Isob [g] | - | - | 0,15 | 0,15^{X} | - |
| SolCop8 [g] | 0,10 | 0,05 | 0,10 | - | - |
| CuSO4 MEG [g] | - | - | - | 0,10 | 0,10 |
| D230 [g] | - | - | 0,24^{X} | 0,24 | - |
| Summe [g] | 10,05 | 10,10 | 10,24 | 10,24 | 10,05 |
| t Temp > 35 °C [hh:mm:ss] | 00:01:50 | 00:02:37 | 00:09:35 | 00:09:29 | 00:03:41 |
| Tₘₐₓ [°C] | 110,0 | 82,3 | 80,4 | 92,4 | 95,7 |

| | | | | | |
|---|---|---|---|---|---|
| die mit ^{X} gekennzeichneten Rohstoffe werden als Härter zugegeben. | | | | | |

In der Beispielformulierung KFR-01 wird anstatt der vereinfachten Harzrezeptur HRIII ein Reaktionsharz basierend auf einem Epoxymethacrylat (CN159) und einem Reaktivverdünner (SR210) - Verhältnis 50 : 50 - verwendet. Außerdem wird in der Formulierung KFR-06 der Reaktiwerdünner (SR210) der vereinfachten Harzrezeptur III durch einen biobasierten Reaktivverdünner (Sarbio6105) ersetzt. Die Tabelle 15 veranschaulicht, dass die erfindungsgemäßen Härtersysteme auch zu einer exothermen und effektiven Polymerisation von kennzeichnungsfreien und teilweise biobasierten Reaktionsharzen führen.

### Beispiel 14: Referenzierunasversuche gegenüber der EP 2 824 117 A1

Um zu belegen, dass die erfindungsgemäß verwendbaren Imine (Radikalstarter b1) und/oder b2)) in Kombination mit Metallsalzen zu deutlich leistungsfähigeren Initiatorsystemen und zu höheren Verbundspannungen gegenüber den in der EP 2 824 117 A1 beanspruchten tertiären aliphatischen Aminen führen, werden folgende Referenzierungsversuche (RefV) durchgeführt:

### RefV-1: Beurteilung auf Aushärtung mit PMDETA als Initiator und variierenden Metallsalzen

Um die Anwendbarkeit des Initiatorsystems PMDETA-Metallsalz auf kalthärtende Vinylesterharze zu beurteilen, werden Beispielformulierungen mit der oben beschriebenen Harzrezeptur I und verschiedenen Metallsalzen - analog Beispiel 4 - erstellt.

**Tabelle 16a: PMDETA als Initiator mit variierenden Metallsalzen**

| **Bezeichnung** | **HRI [g]** | **PMDETA [g]** | **Metallsalz [g]** | **Summe [g]** | **Metall** | **Bemerkung** |
|---|---|---|---|---|---|---|
| PMDETA-001 | 9,75 | 0,25 | 0,10^{X} | 10,10 | SolCop8 | flüssig* |
| PMDETA-009 | 9,75 | 0,50 | 0,10^{X} | 10,35 | SolCop8 | geliert* |
| PMDETA-002 | 9,75 | 0,25 | 0,10^{X} | 10,10 | Iro7/8 | flüssig* |
| PMDETA-003 | 9,75 | 0,25 | 0,10^{X} | 10,10 | VP0132 | flüssig* |
| PMDETA-004 | 9,75 | 0,25 | 0,10^{X} | 10,10 | OxyC | flüssig* |
| PMDETA-005 | 9,75 | 0,25 | 0,10^{X} | 10,10 | Mn6 | flüssig* |

| | | | | | | |
|---|---|---|---|---|---|---|
| ^{X} als Härter zugegeben * nach 24 h | | | | | | |

Aus Tabelle 16a wird deutlich, dass die Konzentrationen analog des Beispiels 4 bei den Härtersystemen PMDETA - Metallsalzen zu keiner Polymerisation des Vinylesterharzes führen. Erst durch eine Erhöhung der Initiatorkonzentration (PMDETA-009) konnte eine Gelierung festgestellt werden.

### RefV-2: Auszugsversuche aus Beton mit PMDETA als Initiator

Das Beispiel 1 und das Beispiel 4a der EP 2 824 117 A1 wird einem Setzversuch unterzogen. Die Tabelle 16b zeigt die Rezepturen zur Durchführung von Setzversuchen und die ermittelten Verbundspannungen.

**Tabelle 16b: Rezepturen zur Durchführung von Setzversuchen zur Differenzierung und ermittelte Verbundspannungen**

| **Bezeichnung** | **SV-PMDETA-010** | **SV-PMDETA-011** | **SV-PMDETA-012** | **SV-PMDETA-013** |
|---|---|---|---|---|
| BDDMA [g] | 26,46 | - | 27,97 | - |
| HRI [g] | - | 26,84 | - | 28,37 |
| PMDETA [g] | 2,28 | 2,31 | 1,12 | 1,13 |
| SolCop8 [g] | 1,40 | 1,42 | 0,56 | 0,57 |
| Sand [g] | 43,81 | 44,43 | 44,29 | 44,92 |
| H18 | 1,05 | - | 1,05 | - |
| Summe [g] | 75,00 | 75,00 | 75,00 | 75,00 |
| Verbundspannung [N/mm²] | 0,37 | 1,56 | 1,02 | 0,10 |

Da in den Beispielen 1 und 4a aus EP 2 824 117 A1 lediglich BDDMA als Vinylesterharz verwendet wird, werden weitere Setzversuche unter Verwendung der Harzrezeptur HRI durchgeführt. Zur Verstärkung wird Sand in analogen Mengen wie in "Beispiel 8: Auszugsversuche aus Beton" zugegeben. Die ermittelten Verbundspannungen des Härtersystems PMDETA - Kupfer(II)salz liegen deutlich unter denen der erfindungsgemäßen Härtersysteme (vgl. Tabelle 10).

Schlussfolgernd lässt sich festhalten, dass das erfindungsgemäße Initiatorsystem Imin - Metallsalz zu deutlich leistungsfähigeren und variableren Härtersystemen, als die in der EP 2 824 117 A1 beanspruchten Systemen, führen. Dies äußert sich sowohl in den höheren Verbundspannungen, als auch in der breiteren möglichen Auswahl an Metallsalzen als Beschleuniger, die nicht nur auf Kupfer limitiert ist. Als wesentlicher Unterschied zur EP 2 824 117 A1 ist nochmals festzuhalten, dass die erfindungsgemäß verwendbaren Radikalstarter in Form von *Iminen* (Aldimine und/oder Ketimine) einen sp²-hybridisierten Stickstoff enthalten. Die in der EP beanspruchten Stickstoff-enthaltenden Liganden in Form von tertiären aliphatischen *Aminen* weisen sp³-hybridisierte Stickstoffatome auf.

## Patentansprüche

1. Härtersystem für eine Kunstharzzusammensetzung, welche radikalisch polymerisierbare Verbindungen beinhaltet, welche die folgenden Bestandteile umfasst:
a) mindestens einen Aktivator in Form eines Metallsalzes und als Radikalstarter
b1) mindestens ein Aldehyd und/oder Keton und mindestens ein primäres Amin, und/oder
b2) ein Imin, welches ein oder mehrere Imin-Strukturinkremente der Formel (I) beinhaltet: 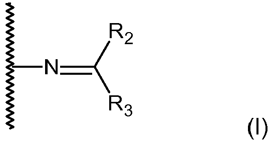 worin unabhängig voneinander:
die gewellte Linie den organischen Rest des verwendeten Amins darstellt, oder für Wasserstoff steht; und
R₂ und R₃ unabhängig voneinander Wasserstoff und/oder einen unsubstituierten oder substituierten, gegebenenfalls Doppelbindungen und/oder Heteroatome aufweisenden, ein- oder mehrfach verzweigten oder geradkettigen organischen Rest, welcher mindestens eine aliphatische, heteroaliphatische, alicyclische oder heterocyclische Molekülstruktur, oder eine Kombination von zwei oder mehr der vorgenannten Molekülstrukturen beinhaltet, bedeutet, und/oder Salze davon.

2. Härtersystem nach Anspruch 1, worin (a) der Aktivator in Form eines Metallsalzes aus ein oder mehreren Salzen von organischen und/oder anorganischen Säuren mit Metallen ausgewählt ist, z.B. ausgewählt aus
Kupfer, Eisen, Vanadium, Mangan, Cer, Kobalt, Zirkonium, oder Wismut, oder Gemischen von zwei oder mehr davon, insbesondere ausgewählt aus Vanadium, Eisen, Mangan und Kupfer, insbesondere in Form von Salzen oder Komplexen mit anorganischen Säureresten, wie Sulfat- und/oder Carbonat-Resten und/oder organischen Säureresten, beispielsweise Carboxylatresten, - wobei die organischen Säuren vorzugsweise gesättigt sind - wie Carboxylate mit CH₃, C₂-C₂₀-Alkyl, einem C₆-C₂₄-Arylrest oder C₇-C₃₀-Aralkylrest, beispielsweise Oktoat, z.B. 2-Ethylhexanoat (Isooctanoat), Neodecanoat, oder Acetylacetonat; wobei besonders Mangancarboxylate, wie Mn-acetat oder Mn-octoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat, Kupfersulfat und Kupferchlorid umfasst, bevorzugt sind;
und/oder
(b2) der Radikalstarter mindestens ein Aldimin oder Ketimin, ausgewählt aus der Gruppe, die durch Kondensation unter Wasserabspaltung eines Mono-, Di, oder Polyamins ausgewählt aus Aminolen, wie Hydroxyniederalkylaminen, z.B. Ethanolamin, Diethanolamin, 1,3-Diaminopropan-2-ol oder 3-Aminopropanol, oder aromatische Aminole, wie 2-, 3- oder 4-Aminophenol;
Alkyl/Alkylen(mono oder di)aminen, insbesondere der Formel R^{a}R^{b}N-E-(NR^{c}R^{d}) worin R^{a}, R^{b}, R^{c}, R^{d} unabhängig voneinander H, Alkyl- oder Cycloalkylreste bedeutet und E eine lineare oder verzweigte, gesättigte oder ungesättigte Alkylenkette mit ≥ 2 C-Atomen, beispielsweise mit maximal 40 C-Atomen, bedeutet, wobei bei den Monoaminen in Form von Alkylaminen der in Klammern gesetzte Rest entfällt und stattdessen ein H vorhanden ist, vorzugsweise Aminobutan, Diaminoethan, Diaminopropan oder weitere Homologe wie 1,4-Diaminobutan, 1,5-Diaminopentan und 1,6-Diaminohexan, 2-Methyl-1,2-propandiamin, 2,2,4- oder 2,4,4-Trimethylhexamethylendiamin;
Cycloalkyl/Cycloalkylen(mono oder di)aminen oder Heterocycloalkyl/Heterocycloalkylen(mono oder di)aminen, insbesondere der Formel R^{e}R^{f}N-G-(NR^{g}R^{h}), worin R^{e}, R^{f}, R^{g}, R^{h} unabhängig voneinander H, Alkyl- oder Cycloalkyl bedeuten und G einen gesättigten oder ungesättigten Cycloalkyl/Cycloalkylen- oder Heterocycloalkyl/Heterocycloalkylenrest mit ≥ 4 Ring-Atomen, und insbesondere mit maximal 10, z.B. maximal 6 Ring-C-Atomen bedeutet, wobei bei den Monoaminen in Form von Cycloalkylaminen oder Heterocycloalkylaminen der in Klammern gesetzte Rest entfällt und stattdessen ein H vorhanden ist; wobei Cyclohexylamine, Diaminocyclohexane, beispielsweise 1,4-Cyclohexandiamin; 4,4'-Methylen-bis-cyclohexylamin; Isophorondiamin, m-Xylylendiamin, , 2,5(2,6)Bis-(aminomethyl)-bicyclo[2.2.1]heptan (NBDA), Octahydro-4,7-methanoindene-1(2),5(6)-dimethanamine (TCD-Diamin), 1,2-, 1,4- oder insbesondere 1,3-Bis(aminomethyl)cyclohexan, oder bei Heterocycloalkylverbindungen Aminoethylpiperazin, bevorzugt sind;
polyfunktionelle Amine, insbesondere aminofunktionalisierte Polyoxyalkylene, wie 2-Bis-(aminoethoxy)-ethan; oder 1,13-Diamino-4,7,10-trioxatridecan;
Verbindungen der Formel H₂N-(CH₂)ᵢ-NH-[(CH₂)ⱼ-NH]ₖ-(CH₂)ᵢ-NH₂, worin i, j und l unabhängig voneinander für 2 bis 4 stehen und k für 0, 1, 2, 3 oder 4 steht, wie z.B. Diethylentriamin, Triethylentetramin, Tetraethylenpentamin und weitere Homologe, Dipropylentriamin, Bis-(3-aminopropyl)-amin;
Aminoamide, Polyaminoamide, Mannich-Basen oder Aminaddukte
oder
Aminoalkylsilane, die mindestens eine, vorzugsweise zwei hydrolysierbare Gruppen, wie Alkoxy, z.B. Methoxy oder Ethoxy - am Silicium gebunden - beinhalten, beispielsweise ausgewählt aus der Gruppe, die ein oder mehrere der folgenden Verbindungen umfasst: Aminoalkyltri- oder -dialkoxysilane, wie 3-Aminopropyl-trimethoxysilan oder 3-Aminopropyltriethoxysilan, und N-(Aminoalkyl)-amino-alkyltri- oder -dialkoxysilane, wie N-(2-Aminoethyl)-3-aminopropyltrimethoxysilan oder N-(2-Aminoethyl)-3-aminopropylmethyldimethoxysilan, ferner Ureidoalkyltrimethoxysilane, wie 3-Ureidopropyltrimethoxysilan; sowie Mischungen von zwei oder mehr davon;
mit einem oder mehreren Aldehyden oder Ketonen der Formel (II), 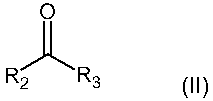 worin:
R₂, R₃ unabhängig voneinander Wasserstoff und/oder einen unsubstituierten oder substituierten und/oder einen gegebenenfalls Heteroatome aufweisenden ein- oder mehrfach verzweigten oder geradkettigen organischen Rest, welcher mindestens eine aliphatische, heteroaliphatische, alicyclische oder heterocyclische Molekülstruktur oder eine Kombination von zwei oder mehr aus den vorgenannten Molekülstrukturen beinhaltet, bedeutet;
wobei es sich bei den Aldehyden und/oder Ketonen vorzugsweise um Verbindungen, welche mindestens ein oder mehrere (primäre und/oder sekundäre) Wasserstoffatome am zur Carbonylgruppe stehenden α-Kohlenstoffatom aufweisen, z.B. Propanal, Valeraldehyd, Isovaleraldehyd, Methoxyacetaldehyd, Methylisobutylketon, Aceton oder Methylethylketon; oder insbesondere um Verbindungen, welche am zur Carbonylgruppe stehenden α-Kohlenstoffatom nur ein (tertiäres) Wasserstoffatom aufweisen, handelt z.B. Isobutyraldehyd, 2-Ethylhexanal, 2-Methylbutanal, 2-Ethylbutanal, 2-Methylvaleraldehyd, 2,3-Dimethylvaleraldehyd, Cyclohexylcarboxaldehyd oder sehr bevorzugt Diisopropylketon, 3-Methyl-2-pentanon oder 2-Methylcyclohexanon; oder Gemische von zwei oder mehr davon, erhältlich sind, umfasst.

3. Härtersystem nach einem der Ansprüche 1 oder 2, wobei als Radikalstarter in b2) nur ein oder mehrere Aldimine vorgesehen sind und kein Ketimin.

4. Härtersystem nach Anspruch 1, worin (a) der Aktivator in Form eines Metallsalzes aus ein oder mehreren Salzen von organischen und/oder anorganischen Säuren mit Metallen ausgewählt ist, z.B. ausgewählt aus
Kupfer, Eisen, Vanadium, Mangan, Cer, Kobalt, Zirkonium, oder Wismut, oder Gemischen von zwei oder mehr davon, insbesondere ausgewählt aus Vanadium, Eisen, Mangan und Kupfer, insbesondere in Form von Salzen oder Komplexen mit anorganischen Säureresten, wie Sulfat- und/oder Carbonat-Resten und/oder organischen Säureresten, beispielsweise Carboxylatresten, - wobei die organischen Säuren vorzugsweise gesättigt sind - wie Carboxylate mit CH₃, C₂-C₂₀-Alkyl, einem C₆-C₂₄Arylrest oder C₇-C₃₀-Aralkylrest, beispielsweise Oktoat, z.B. 2-Ethylhexanoat (Isooctanoat), Neodecanoat, oder Acetylacetonat; wobei besonders Mangancarboxylate, wie Mn-acetat oder Mn-octoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat, Kupfersulfat und Kupferchlorid umfasst, bevorzugt sind;
und/oder
b2) als Radikalstarter mindestens einer der in Anspruch 2 genannten und/oder mindestens ein Aldehyd und/oder Keton und als primäres Amin ein oder mehrere aminosilanisierte Füllstoffe, die primäre Aminogruppen tragen, wie aminosilanbehandeltes Quarzmehl, oder aminosilan-behandelte pyrogene Kieselsäuren, vorgesehen und beinhaltet sind.

5. Härtersystem nach einem der Ansprüche 1 oder 2 oder 3, wobei als Radikalstarter b2) ein oder mehrere Aldimine ausgewählt aus den Reaktionsprodukten von Isobutyraldehyd und 3-Aminopropyl-trimethoxysilan; von Isobutyraldehyd und m-Xylylendiamin; von Isobutyraldehyd und 1,3-Bis(aminomethyl)-cyclohexan; von Isobutyraldehyd und Jeffamin D230; von Isobutyraldehyd und Isophorondiamin; von Isobutyradehyd und Jeffamin DER-148; von Isobutyraldehyd und Diethyltoluoldiamin; und von Isobutyraldehyd und Cyclohexan-1,2-diamin; oder Mischungen von zwei oder mehr dieser Reaktionsprodukte; vorgesehen sind.

6. Härtersystem nach einem der Ansprüche 1 bis 5,
worin (a) der Aktivator in Form eines Metallsalzes aus ein oder mehreren Salzen von organischen und/oder anorganischen Säuren mit Metallen vorgesehen ist, z.B. ausgewählt aus Kupfer, Eisen, Vanadium, Mangan, Cer, Kobalt, Zirkonium, oder Wismut, oder Gemischen von zwei oder mehr davon, insbesondere ausgewählt aus Vanadium, Eisen, Mangan und Kupfer, insbesondere in Form von Salzen oder Komplexen mit anorganischen Säureresten, wie Sulfat- und/oder Carbonat-Resten und/oder organischen Säureresten, beispielsweise Carboxylatresten, - wobei die organischen Säuren vorzugsweise gesättigt sind - wie Carboxylate mit CH₃, C₂-C₂₀-Alkyl, einem C₆-C₂₄Arylrest oder C₇-C₃₀-Aralkylrest, beispielsweise Oktoat, z.B. 2-Ethylhexanoat (Isooctanoat), Neodecanoat, oder Acetylacetonat; wobei besonders Mangancarboxylate, wie Mn-acetat oder Mn-octoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat, Kupfersulfat und Kupferchlorid umfasst, bevorzugt sind;
und/oder
(b1) der Radikalstarter mindestens ein Aldehyd oder Keton der Formel (II), 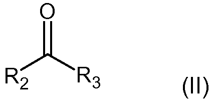 worin:
R₂, R₃ unabhängig voneinander Wasserstoff und/oder einen unsubstituierten oder substituierten und/oder einen gegebenenfalls Heteroatome aufweisenden ein- oder mehrfach verzweigten oder geradkettigen organischen Rest, welcher mindestens eine aliphatische, heteroaliphatische, alicyclische oder heterocyclische Molekülstruktur oder eine Kombination von zwei oder mehr aus den vorgenannten Molekülstrukturen beinhaltet, bedeutet;
wobei es sich bei den Aldehyden und/oder Ketonen vorzugsweise um Verbindungen handelt, welche mindestens ein oder mehrere (primäre und/oder sekundäre) Wasserstoffatome am zur Carbonylgruppe stehenden α-Kohlenstoffatom aufweisen, z.B. Propanal, Valeraldehyd, Isovaleraldehyd, Methoxyacetaldehyd, 3,7-Dimethyl-6-octenal oder 3,7-Dimethyl-7-hydroxy-octanal, Methylisobutylketon, Aceton oder Methylethylketon; oder insbesondere um Verbindungen, welche am zur Carbonylgruppe stehenden α-Kohlenstoffatom nur ein (tertiäres) Wasserstoffatom aufweisen, handelt z.B. Isobutyraldehyd, 2-Ethylhexanal, 2-Methylbutanal, 2-Ethylbutanal, 2-Methylvaleraldehyd, 2,3-Dimethylvaleraldehyd, Cyclohexylcarboxaldehyd, 3,7-Dimethyl-2,6-octadienal, 3-(4-tert-Butylphenyl)-2-methylpropanal, Tetrahydrofuran-3-carboxaldehyd, Tetrahydro-2-furancarboxaldehyd, 4-Formyltetrahydropyran, Tetrahydro-2H-pyran-2-carbaldehyd, Tetrahydro-pyran-3-carbaldehyd, Diisopropylketon, 3-Methyl-2-pentanon, 2-Methylcyclohexanon, ß-Ionone oder 6-Methyl-5-hepten-2-on; oder Gemische von zwei oder mehr davon,
und mindestens ein primäres Amin umfasst,
vorzugsweise ausgewählt aus der Gruppe, die Mono-, Di, und Polyamine, insbesondere Alkyl- oder Alkylen(mono oder di)amine, wie z.B.: 2-Methylpentandiamin, oder 2,2,4- oder 2,4,4-Trimethylhexamethylendiamin,
Heteroalkyl- oder Heteroalkylen(mono oder di)amine, wie beispielsweise 1,13-Diamino-4,7,10-trioxatridecan, aminfunktionalisierte Polyoxyalkylene [Jeffamine] oder z.B.: Triethylentetramin und/oder höhere Homologe, Cycloalkyl- oder Cycloalkylen(mono oder di)amine, wie z.B.: Isophorondiamin, 1,3-Bisaminomethylcyclohexan, TCD-Diamin,
Heterocyloalkyl- oder Heterocycloalkylen(mono oder di)amine, wie z.B. Aminoethylpiperazin, Aminole bzw. , wie z.B.: 1,3-Diaminopropan-2-ol), und
Arylalkyl- oder Arylalkylen(mono oder di)amine, wie 1,3- oder 1,4-Benzoldimethanamin, ausgewählt und/oder aus der Gruppe der aminosilanisierten Füllstoffe;
Aminoamide, Polyaminoamide, Mannich-Basen oder Aminaddukte, wie Epoxid-Amin-Addukte, Isocyanat-Amin-Addukte, Bucherer-Addukte und Michael-Additions-Addukte;
Aminoalkylsilane, die mindestens eine hydrolysierbare Gruppe, wie Alkoxy, z.B. Methoxy oder Ethoxy - am Silicium gebunden - beinhalten, beispielsweise ausgewählt aus der Gruppe, die ein oder mehrere der folgenden Verbindungen umfasst: Aminoalkyltri- oder -dialkoxysilane, wie 3-Aminopropyl-trimethoxysilan oder 3-Aminopropyltriethoxysilan, und N-(Aminoalkyl)-amino-alkyltri- oder -dialkoxysilane, wie N-(2-Aminoethyl)-3-aminopropyl-trimethoxysilan oder N-(2-Aminoethyl)-3-aminopropylmethyldimethoxysilan, ferner Ureidoalkyltrimethoxysilane, wie 3-Ureidopropyltrimethoxysilan;
und aminosilanisierte Füllstoffe, die primäre Aminogruppen tragen, wie aminosilanbehandeltes Quarzmehl, aminosilanbehandelte Kieselerde, oder aminosilan-behandelte pyrogene Kieselsäuren,
sowie Mischungen von zwei oder mehr der genannten Amine;
wobei die Bestandteile Aldehyd und/oder Keton einerseits und der Bestandteil primäres Amin andererseits vorzugsweise getrennt auf zwei Komponenten aufgeteilt und erst zur Vermischung beim Einsatz des Härtersystems bei der Verwendung in einem Klebstoff, Beschichtungsstoff oder einer Formmasse, insbesondere bei der Befestigung von Verankerungsmitteln in (Bau-)Substraten, vorgesehen sind.

7. Härtersystem nach Anspruch 1, worin (a) der Aktivator in Form eines Metallsalzes aus ein oder mehreren Salzen von organischen und/oder anorganischen Säuren mit Metallen ausgewählt ist, z.B. ausgewählt aus den in Anspruch 2 genannten ausgewählt ist, und als Radikalstarter
b1) mindestens ein Aldehyd und/oder Keton und mindestens ein primäres Amin vorgesehen ist,
wobei es sich bei dem Aldehyd und/oder Keton vorzugsweise um eine Verbindung, welche mindestens ein oder mehrere (primäre und/oder sekundäre) Wasserstoffatome am zur Carbonylgruppe stehenden α-Kohlenstoffatom aufweist, z.B. Propanal, Valeraldehyd, Isovaleraldehyd, Methoxyacetaldehyd, 3,7-Dimethyl-6-octenal oder 3,7-Dimethyl-7-hydroxyoctanal, Methylisobutylketon, Aceton oder Methylethylketon; oder insbesondere um eine Verbindung, welche am zur Carbonylgruppe stehenden α-Kohlenstoffatom nur ein (tertiäres) Wasserstoffatom aufweist, handelt z.B. Isobutyraldehyd, 2-Ethylhexanal, 2-Methylbutanal, 2-Ethylbutanal, 2-Methylvaleraldehyd, 2,3-Dimethylvaleraldehyd, Cyclohexylcarboxaldehyd, 3,7-Dimethyl-2,6-octadienal, 3-(4-tert-Butylphenyl)-2-methylpropanal (Lilial, Lysmeral), Tetrahydrofuran-3-carboxaldehyd, Tetrahydro-2-furancarboxaldehyd, 4-Formyltetrahydropyran, Tetrahydro-2H-pyran-2-carbaldehyd, Tetrahydro-pyran-3-carbaldehyd, Diisopropylketon, 3-Methyl-2-pentanon, 2-Methylcyclohexanon, ß-Ionone oder 6-Methyl-5-hepten-2-on; oder Gemische von zwei oder mehr davon, handelt,
und es sich bei den primären Aminen vorzugsweise um solche handelt, die ausgewählt sind aus der Gruppe, die Mono-, Di, und Polyamine, insbesondere Alkyl- oder Alkylen(mono oder di)amine, wie z.B.: 2-Methylpentandiamin, oder 2,2,4- oder 2,4,4-Trimethylhexamethylendiamin,
Heteroalkyl- oder Heteroalkylen(mono oder di)amine, wie beispielsweise 1,13-Diamino-4,7,10-trioxatridecan, aminfunktionalisierte Polyoxyalkylene [Jeffamine] oder z.B.: Triethylentetramin und/oder höhere Homologe, Cycloalkyl- oder Cycloalkylen(mono oder di)amine, wie z.B.: Isophorondiamin, 1,3-Bisaminomethylcyclohexan, TCD-Diamin,
Heterocyloalkyl- oder Heterocycloalkylen(mono oder di)amine, wie z.B. Aminoethylpiperazin, Aminole bzw. , wie z.B.: 1,3-Diaminopropan-2-ol), und Arylalkyl- oder Arylalkylen(mono oder di)amine, wie 1,3- oder 1,4-Benzoldimethanamin, ausgewählt und/oder aus der Gruppe der aminosilanisierten Füllstoffe;
Aminoamide, Polyaminoamide, Mannich-Basen oder Aminaddukte, wie Epoxid-Amin-Addukte, Isocyanat-Amin-Addukte, Bucherer-Addukte und Michael-Additions-Addukte; Aminoalkylsilane, die mindestens eine hydrolysierbare Gruppe, wie Alkoxy, z.B. Methoxy oder Ethoxy - am Silicium gebunden - beinhalten, beispielsweise ausgewählt aus der Gruppe, die ein oder mehrere der folgenden Verbindungen umfasst: Aminoalkyltri- oder-dialkoxysilane, wie 3-Aminopropyl-trimethoxysilan oder 3-Aminopropyltriethoxysilan, und N-(Aminoalkyl)-amino-alkyltri- oder -dialkoxysilane, wie N-(2-Aminoethyl)-3-aminopropyl-trimethoxysilan oder N-(2-Aminoethyl)-3-aminopropylmethyldimethoxysilan, ferner Ureidoalkyltrimethoxysilane, wie 3-Ureidopropyltrimethoxysilan;
und aminosilanisierte Füllstoffe, die primäre Aminogruppen tragen, wie aminosilanbehandeltes Quarzmehl, aminosilanbehandelte Kieselerde, oder aminosilan-behandelte pyrogene Kieselsäuren, umfasst;
sowie Mischungen von zwei oder mehr der genannten Amine umfasst;
wobei die Bestandteile Aldehyd und/oder Keton einerseits und der Bestandteil primäres Amin andererseits vorzugsweise getrennt auf zwei Komponenten aufgeteilt und erst zur Vermischung beim Einsatz des Härtersystems bei der Verwendung in einem Klebstoff, Beschichtungsstoff oder einer Formmasse, insbesondere bei der Befestigung von Verankerungsmitteln in (Bau-)Substraten, vorgesehen sind.
und/oder
b2) ein Imin, welches ein oder mehrere Imin-Strukturinkremente der in Anspruch 1 gezeigten Formel (I) beinhaltet, insbesondere erhältlich durch Umsetzung mindestens ein Aldehyds und/oder Keton mit mindestens einem primären Amin,
wobei es sich bei dem Aldehyd und/oder Keton vorzugsweise um eine Verbindung, welche mindestens ein oder mehrere (primäre und/oder sekundäre) Wasserstoffatome am zur Carbonylgruppe stehenden α-Kohlenstoffatom aufweist, z.B. Propanal, Valeraldehyd, Isovaleraldehyd, Methoxyacetaldehyd, 3,7-Dimethyl-6-octenal oder 3,7-Dimethyl-7-hydroxyoctanal, Methylisobutylketon, Aceton oder Methylethylketon, handelt; oder insbesondere um eine Verbindung, welche am zur Carbonylgruppe stehenden α-Kohlenstoffatom nur ein Wasserstoffatom aufweist, handelt, z.B. Isobutyraldehyd, 2-Ethylhexanal, 2-Methylbutanal, 2-Ethylbutanal, 2-Methylvaleraldehyd, 2,3-Dimethylvaleraldehyd, Cyclohexylcarboxaldehyd, 3,7-Dimethyl-2,6-octadienal, 3-(4-tert-Butylphenyl)-2-methylpropanal, Tetrahydrofuran-3-carboxaldehyd, Tetrahydro-2-furancarboxaldehyd, 4-Formyltetrahydropyran, Tetrahydro-2H-pyran-2-carbaldehyd, Tetrahydro-pyran-3-carbaldehyd, Diisopropylketon, 3-Methyl-2-pentanon, 2-Methylcyclohexanon, ß-Ionone oder 6-Methyl-5-hepten-2-on; oder Gemische von zwei oder mehr davon,
und es sich bei den primären Aminen vorzugsweise um solche handelt, die ausgewählt sind aus der Gruppe, die Mono-, Di, und Polyamine, insbesondere
Alkyl- oder Alkylen(mono oder di)amine, wie z.B.: 2-Methylpentandiamin, oder 2,2,4- oder 2,4,4-Trimethylhexamethylendiamin,
Heteroalkyl- oder Heteroalkylen(mono oder di)amine, wie beispielsweise 1,13-Diamino-4,7,10-trioxatridecan, aminfunktionalisierte Polyoxyalkylene [Jeffamine] oder z.B.: Triethylentetramin und/oder höhere Homologe,
Cycloalkyl- oder Cycloalkylen(mono oder di)amine, wie z.B.: Isophorondiamin, 1,3-Bisaminomethylcyclohexan, TCD-Diamin,
Heterocyloalkyl- oder Heterocycloalkylen(mono oder di)amine, wie z.B. Aminoethylpiperazin, Aminole bzw. , wie z.B.: 1,3-Diaminopropan-2-ol), und Arylalkyl- oder Arylalkylen(mono oder di)amine, wie 1,3- oder 1,4-Benzoldimethanamin, ausgewählt und/oder aus der Gruppe der aminosilanisierten Füllstoffe;
Aminoamide, Polyaminoamide, Mannich-Basen oder Aminaddukte, wie Epoxid-Amin-Addukte, Isocyanat-Amin-Addukte, Bucherer-Addukte und Michael-Additions-Addukte; Aminoalkylsilane, die mindestens eine hydrolysierbare Gruppe, wie Alkoxy, z.B. Methoxy oder Ethoxy - am Silicium gebunden - beinhalten, beispielsweise ausgewählt aus der Gruppe, die ein oder mehrere der folgenden Verbindungen umfasst: Aminoalkyltri- oder-dialkoxysilane, wie 3-Aminopropyl-trimethoxysilan oder 3-Aminopropyltriethoxysilan, und N-(Aminoalkyl)-amino-alkyltri- oder -dialkoxysilane, wie N-(2-Aminoethyl)-3-aminopropyl-trimethoxysilan oder N-(2-Aminoethyl)-3-aminopropylmethyldimethoxysilan, ferner Ureidoalkyltrimethoxysilane, wie 3-Ureidopropyltrimethoxysilan;
und aminosilanisierte Füllstoffe, die primäre Aminogruppen tragen, wie aminosilanbehandeltes Quarzmehl, aminosilanbehandelte Kieselerde, oder aminosilan-behandelte pyrogene Kieselsäuren,;
sowie Mischungen von zwei oder mehr der genannten Amine umfasst.

8. Verwendung eines Härtersystems nach einem der Ansprüche 1 bis 7 als Initiatorsystem für eine Kunstharzzusammensetzung mit radikalisch polymerisierbaren Verbindungen, die weiter als Bestandteil
c) mindestens eine radikalisch polymerisierbare Verbindung beinhaltet.

9. Verwendung nach Anspruch 8, wobei als mindestens eine radikalisch polymerisierbare Verbindung
ein radikalisch härtendes ungesättigtes Reaktionsharz mit bevorzugt mindestens 2 oder mehr reaktiven nichtaromatischen ungesättigten Bindungen, oder eine Mischung von zwei oder mehr Reaktionsharzen; insbesondere aus der Gruppe der ethylenisch ungesättigten Verbindungen, die Styrol und Derivate, Vinylester, wie (Meth)Acrylate oder Urethan(meth)-acrylate oder Itaconate, ferner ungesättigte Polyester, Vinylether, Allylether, Dicyclopentadien-Verbindungen und ungesättigte Fette, umfasst; insbesondere ein oder mehrere Reaktivharze, die (radikalisch) härtbare Ester mit ein oder mehreren ungesättigten Carbonsäureresten umfassen; vorzugsweise jeweils propoxylierte oder insbesondere ethoxylierte aromatische Diol-, wie Bisphenol-A-, Bisphenol-F- oder Novolak-(insbesondere di-) (meth)acrylate; Epoxy(meth)acrylate, insbesondere in Form von Umsetzungs-produkten von Di- oder Polyepoxiden, z.B. Bisphenol-A-, Bisphenol-F- oder Novolak-di- und/ oder-polyglycidylethern, mit ungesättigten Carbonsäuren, z.B. C₂-C₇-Alkencarbonsäuren, wie insbesondere (Meth)acrylsäure; Urethan- und/oder Harnstoff(meth)acrylate, was auch oligo- oder polymere Varianten einschließt; oder ungesättigte Polyester¬harze, oder dergleichen, oder zwei oder mehr dieser härtbaren ungesättigten organischen Komponenten; vorgesehen ist.

10. Kunstharzzusammensetzung, beinhaltend die Bestandteile
a) mindestens einen Aktivator in Form eines Metallsalzes wie in einem der Ansprüche 1 bis 4 beinhaltet,
als Radikalkettenstarter
b1) mindestens ein Aldehyd und/oder Keton und ein primäres Amin wie in einem der Ansprüche 1, 4, 6 oder 7 genannt oder
b2) mindestens ein Ketimin oder insbesondere Aldimin wie in einem der Ansprüche 1, bis 5 beinhaltet; und
c) mindestens eine radikalisch polymerisierbare Verbindung wie in Anspruch 6 oder 9 definiert.

11. Kunstharzzusammensetzung nach Anspruch 10, worin als Radikalkettenstarter b2) mindestens ein Ketimin oder insbesondere Aldimin wie in einem der Ansprüche 1 bis 3, in Anspruch 5 oder in Anspruch 6 beinhaltet vorgesehen ist.

12. Kunstharzzusammensetzung nach Anspruch 10, worin als Radikalkettenstarter b1) mindestens ein Aldehyd und/oder Keton und ein primäres Amin wie in einem der Ansprüche 1, 2, 4, 6 oder 7 genannt, insbesondere wie in Anspruch 6 genannt, vorgesehen sind.

13. Kunstharzzusammensetzung nach Anspruch 10 oder 11, **dadurch gekennzeichnet, dass**
(a) der Aktivator in Form eines Metallsalzes aus ein oder mehreren Salzen von organischen und/oder anorganischen Säuren mit Metallen ausgewählt ist, z.B. ausgewählt aus Kupfer, Eisen, Vanadium, Mangan, Cer, Kobalt, Zirkonium, oder Wismut, oder Gemischen von zwei oder mehr davon, insbesondere ausgewählt aus Vanadium, Eisen, Mangan und Kupfer, insbesondere in Form von Salzen oder Komplexen mit anorganischen Säureresten, wie Sulfat- und/oder Carbonat-Resten und/oder organischen Säureresten, beispielsweise Carboxylatresten, - wobei die organischen Säuren vorzugsweise gesättigt sind - wie Carboxylate mit CH₃, C₂-C₂₀-Alkyl, einem C₆-C₂₄Arylrest oder C₇-C₃₀-Aralkylrest, beispielsweise Oktoat, z.B. 2-Ethylhexanoat (Isooctanoat), Neodecanoat, oder Acetylacetonat; wobei besonders Mangancarboxylate, wie Mn-acetat oder Mn-octoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat, Kupfersulfat und Kupferchlorid umfasst, bevorzugt sind;
und/oder
der Radikalstarter b2) mindestens ein Aldimin oder Ketimin, ausgewählt aus der Gruppe, die durch Kondensation unter Wasserabspaltung der in Anspruch 2 genannten Mono-, Di- oder Polyamine
mit einem oder mehreren Aldehyden oder Ketonen der Formel (II), 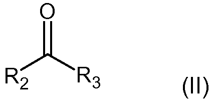 wie in Anspruch 2 definiert
erhältlich sind, umfasst.

14. Kunstharzzusammensetzung nach Anspruch 10, worin
(a) der Aktivator in Form eines Metallsalzes aus ein oder mehreren Salzen von organischen und/oder anorganischen Säuren mit Metallen ausgewählt ist, z.B. ausgewählt aus den in Anspruch 13 genannten;
und/oder
b1) als Radikalstarter mindestens einer der in Anspruch 2 genannten und/oder mindestens ein Aldehyd und/oder Keton und als primäres Amin ein oder mehrere aminosilanisierte Füllstoffe, die primäre Aminogruppen tragen, wie aminosilanbehandeltes Quarzmehl (z.B Silbond AST® der Fa. Quarzwerke GmbH), aminosilanbehandelte Kieselerde (z.B. Aktisil AM® von Hoffmann Mineral), oder aminosilan-behandelte pyrogene Kieselsäuren, vorgesehen und beinhaltet sind.

15. Kunstharzzusammensetzung nach einem der Ansprüche 10 bis 14 in Form eines Mehrkomponentensystems oder -kits.

16. Verwendung einer Kunstharzzusammensetzung nach einem der Ansprüche 10 bis 15 als Klebstoff, Beschichtungsstoff oder Formmasse.

17. Verwendung einer Kunstharzzusammensetzung nach einem der Ansprüche 10 bis 14 zur Befestigung von Verankerungsmitteln in Bausubstraten.

18. Verfahren oder Methode zum Befestigen von Verankerungsmitteln in Löchern oder Spalten, wobei eine Kunstharzzusammensetzung nach einem der Ansprüche 10 bis 14 und ein Verankerungsmittel nacheinander oder gleichzeitig in ein Loch oder einen Spalt in einem Bausubstrat eingebracht werden, oder zur Befestigung von Fasern, Gelegen, Geweben oder Composites zur Verstärkung von Bauwerken, bei dem eine Kunstharzzusammensetzung nach einem der Ansprüche 10 bis 14 als Befestigungsmittel verwendet wird.

## Claims

1. Hardener system for a synthetic resin composition which includes free-radical-polymerisable compounds, which comprises the following constituents:
a) at least one activator in the form of a metal salt, and as free-radical starter
b1) at least one aldehyde and/or ketone and at least one primary amine, and/or
b2) an imine which includes one or more imine structural increments of the formula (I): 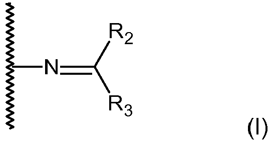 wherein independently of one another:
the wavy line represents the organic radical of the amine used, or denotes hydrogen; and
R₂ and R₃ each independently of the other denotes hydrogen and/or an unsubstituted or substituted, optionally double-bond- and/or hetero-atom-containing, singly or multiply branched or straight-chain organic radical which includes at least one aliphatic, heteroaliphatic, alicyclic or heterocyclic molecular structure, or a combination of two or more of the afore-mentioned molecular structures; and/or salts thereof.

2. Hardener system according to claim 1, wherein (a) the activator in the form of a metal salt is selected from one or more salts of organic and/or inorganic acids with metals, for example selected from
copper, iron, vanadium, manganese, cerium, cobalt, zirconium, or bismuth, or mixtures of two or more thereof, especially selected from vanadium, iron, manganese and copper, especially in the form of salts or complexes with inorganic acid radicals, such as sulfate and/or carbonate radicals and/or organic acid radicals, for example carboxylate radicals, - the organic acids preferably being saturated - such as carboxylates with CH₃, C₂-C₂₀alkyl, a C₆-C₂₄aryl radical or C₇-C₃₀aralkyl radical, for example octoate, for example 2-ethyl hexanoate (isooctanoate), neodecanoate, or acetylacetonate; with special preference being given to manganese carboxylates, such as Mn acetate or Mn octoate, copper carboxylates, such as copper octoate or copper naphthenate, copper quinolates, iron carboxylates, such as iron octoate and/or vanadium carboxylates and/or the group of metal salts with inorganic acids which comprises, for example, iron chloride, iron sulfate, copper sulfate and copper chloride;
and/or
(b2) the free-radical starter comprises at least one aldimine or ketimine, selected from the group obtainable by condensation, with removal of water, of a mono-, di- or poly-amine selected from aminols, such as hydroxy-lower alkylamines, for example ethanolamine, diethanolamine, 1,3-diaminopropan-2-ol or 3-aminopropanol, or aromatic aminols, such as 2-, 3- or 4-aminophenol;
alkyl/alkylene(mono- or di-)amines, especially of the formula R^{a}R^{b}N-E-(NR^{c}R^{d}), wherein R^{a}, R^{b}, R^{c}, R^{d} each independently of the others denotes H, alkyl or cycloalkyl radicals and E denotes a linear or branched, saturated or unsaturated alkylene chain having ≥ 2 C atoms, for example having a maximum of 40 C atoms, wherein in the case of the monoamines in the form of alkylamines the radical in brackets is absent and instead a H atom is present, preferably aminobutane, diaminoethane, diaminopropane or further homologues such as 1,4-diaminobutane, 1,5-diaminopentane and 1,6-diaminohexane, 2-methyl-1,2-propanediamine, 2,2,4- or 2,4,4-trimethylhexamethylenediamine;
cycloalkyl/cycloalkylene(mono- or di-)amines or heterocycloalkyl/heterocycloalkylene(mono- or di-)amines, especially of the formula R^{e}R^{f}N-G-(NR^{g}R^{h}), wherein R^{e}, R^{f}, R^{g}, R^{h} each independently of the others denotes H, alkyl or cycloalkyl and G denotes a saturated or unsaturated cycloalkyl/cycloalkylene or heterocycloalkyl/heterocycloalkylene radical having ≥ 4 ring atoms, and especially having a maximum of 10, for example a maximum of 6, ring C atoms, wherein in the case of the monoamines in the form of cycloalkylamines or heterocycloalkylamines the radical in brackets is absent and instead a H atom is present; with preference being given to cyclohexylamines, diaminocyclohexanes, for example 1,4-cyclohexanediamine; 4,4'-methylene-bis-cyclohexylamine; isophoronediamine, m-xylylenediamine, 2,5(2,6)bis-(aminomethyl)-bicyclo[2.2.1]heptane (NBDA), octahydro-4,7-methano- indene-1(2),5(6)-dimethanamine (TCD-diamine), 1,2-, 1,4- or especially 1,3-bis(aminomethyl)-cyclohexane, or in the case of heterocycloalkyl compounds aminoethylpiperazine;
polyfunctional amines, especially amino-functionalised polyoxyalkylenes, such as 2-bis-(aminoethoxy)-ethane; or 1,13-diamino-4,7,10-trioxatridecane;
compounds of the formula H₂N-(CH₂)ᵢ-NH-[(CH₂)ⱼ-NH]ₖ-(CH₂)ₗ-NH₂, wherein i, j and l each independently of the others denotes from 2 to 4 and k denotes 0, 1, 2, 3 or 4, such as, for example, diethylenetriamine, triethylenetetramine, tetraethylenepentamine and further homologues, dipropylenetriamine, bis(3-aminopropyl)amine;
aminoamides, polyaminoamides, Mannich bases or amine adducts
or
aminoalkylsilanes which include at least one, preferably two, hydrolysable groups, such as alkoxy, for example methoxy or ethoxy - bonded to the silicon, for example selected from the group which comprises one or more of the following compounds: aminoalkyl-tri- or -di-alkoxysilanes, such as 3-aminopropyl-trimethoxysilane or 3-aminopropyltriethoxysilane, and N-(aminoalkyl)-amino-alkyl-tri- or -di-alkoxysilanes, such as N-(2-aminoethyl)-3-aminopropyl-trimethoxysilane or N-(2-aminoethyl)-3-aminopropylmethyldimethoxysilane, furthermore ureidoalkyltrimethoxysilanes, such as 3-ureidopropyltrimethoxysilane;
and mixtures of two or more thereof;
with one or more aldehydes or ketones of the formula (II), 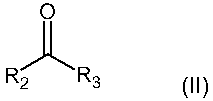 wherein:
R₂, R₃ each independently of the other denotes hydrogen and/or an unsubstituted or substituted and/or an optionally hetero-atom-containing singly or multiply branched or straight-chain organic radical which includes at least one aliphatic, heteroaliphatic, alicyclic or heterocyclic molecular structure or a combination of two or more of the afore-mentioned molecular structures;
the aldehydes and/or ketones preferably being compounds which have at least one or more (primary and/or secondary) hydrogen atoms at the carbon atom in the α-position to the carbonyl group, for example propanal, valeraldehyde, isovaleraldehyde, methoxy-acetaldehyde, methyl isobutyl ketone, acetone or methyl ethyl ketone; or especially compounds which have only one (tertiary) hydrogen atom at the carbon atom in the α-position to the carbonyl group, for example isobutyraldehyde, 2-ethylhexanal, 2-methylbutanal, 2-ethylbutanal, 2-methylvaleraldehyde, 2,3-dimethylvaleraldehyde, cyclohexylcarboxaldehyde or very preferably diisopropyl ketone, 3-methyl-2-pentanone or 2-methylcyclohexanone; or mixtures of two or more thereof.

3. Hardener system according to either one of claims 1 and 2, wherein as free-radical starter in b2) only one or more aldimines are provided and no ketimine.

4. Hardener system according to claim 1, wherein (a) the activator in the form of a metal salt is selected from one or more salts of organic and/or inorganic acids with metals, for example selected from
copper, iron, vanadium, manganese, cerium, cobalt, zirconium, or bismuth, or mixtures of two or more thereof, especially selected from vanadium, iron, manganese and copper, especially in the form of salts or complexes with inorganic acid radicals, such as sulfate and/or carbonate radicals and/or organic acid radicals, for example carboxylate radicals, - the organic acids preferably being saturated - such as carboxylates with CH₃, C₂-C₂₀alkyl, a C₆-C₂₄aryl radical or C₇-C₃₀aralkyl radical, for example octoate, for example 2-ethyl hexanoate (isooctanoate), neodecanoate, or acetylacetonate; with special preference being given to manganese carboxylates, such as Mn acetate or Mn octoate, copper carboxylates, such as copper octoate or copper naphthenate, copper quinolates, iron carboxylates, such as iron octoate and/or vanadium carboxylates and/or the group of metal salts with inorganic acids which comprises, for example, iron chloride, iron sulfate, copper sulfate and copper chloride;
and/or
b2) as free-radical starter there are provided and included at least one of those mentioned in claim 2 and/or at least one aldehyde and/or ketone and as primary amine one or more aminosilanised fillers that carry primary amino groups, such as aminosilane-treated quartz powder, or aminosilane-treated pyrogenic silicas.

5. Hardener system according to any one of claims 1, 2 and 3, wherein as free-radical starter b2) there are provided one or more aldimines selected from the reaction products of isobutyraldehyde and 3-aminopropyl-trimethoxysilane; of isobutyraldehyde and m-xylylenediamine; of isobutyraldehyde and 1,3-bis(aminomethyl)-cyclohexane; of isobutyraldehyde and Jeffamine D230; of isobutyraldehyde and isophoronediamine; of isobutyraldehyde and Jeffamine DER-148; of isobutyraldehyde and diethyltoluenediamine; and of isobutyraldehyde and cyclohexane-1,2-diamine; or mixtures of two or more of those reaction products.

6. Hardener system according to any one of claims 1 to 5,
wherein (a) the activator in the form of a metal salt is provided from one or more salts of organic and/or inorganic acids with metals, for example selected from copper, iron, vanadium, manganese, cerium, cobalt, zirconium, or bismuth, or mixtures of two or more thereof, especially selected from vanadium, iron, manganese and copper, especially in the form of salts or complexes with inorganic acid radicals, such as sulfate and/or carbonate radicals and/or organic acid radicals, for example carboxylate radicals, - the organic acids preferably being saturated - such as carboxylates with CH₃, C₂-C₂₀alkyl, a C₆-C₂₄aryl radical or C₇-C₃₀aralkyl radical, for example octoate, for example 2-ethyl hexanoate (isooctanoate), neodecanoate, or acetylacetonate; with special preference being given to manganese carboxylates, such as Mn acetate or Mn octoate, copper carboxylates, such as copper octoate or copper naphthenate, copper quinolates, iron carboxylates, such as iron octoate and/or vanadium carboxylates and/or the group of metal salts with inorganic acids which comprises, for example, iron chloride, iron sulfate, copper sulfate and copper chloride;
and/or
(b1) the free-radical starter comprises at least one aldehyde or ketone of the formula (II), 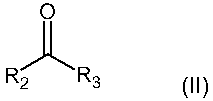 wherein:
R₂, R₃ each independently of the other denotes hydrogen and/or an unsubstituted or substituted and/or an optionally hetero-atom-containing singly or multiply branched or straight-chain organic radical which includes at least one aliphatic, heteroaliphatic, alicyclic or heterocyclic molecular structure or a combination of two or more of the afore-mentioned molecular structures;
the aldehydes and/or ketones preferably being compounds which have at least one or more (primary and/or secondary) hydrogen atoms at the carbon atom in the α-position to the carbonyl group, for example propanal, valeraldehyde, isovaleraldehyde, methoxy-acetaldehyde, 3,7-dimethyl-6-octenal or 3,7-dimethyl-7-hydroxyoctanal, methyl isobutyl ketone, acetone or methyl ethyl ketone; or especially compounds which have only one (tertiary) hydrogen atom at the carbon atom in the α-position to the carbonyl group, for example isobutyraldehyde, 2-ethylhexanal, 2-methylbutanal, 2-ethylbutanal, 2-methylvaleraldehyde, 2,3-dimethylvaleraldehyde, cyclohexylcarboxaldehyde, 3,7-dimethyl-2,6-octadienal, 3-(4-tert-butylphenyl)-2-methylpropanal, tetrahydrofuran-3-carboxaldehyde, tetrahydro-2-furancarboxaldehyde, 4-formyltetrahydropyran, tetrahydro-2H-pyran-2-carbaldehyde, tetrahydropyran-3-carbaldehyde, diisopropyl ketone, 3-methyl-2-pentanone, 2-methylcyclohexanone, β-ionones or 6-methyl-5-hepten-2-one; or mixtures of two or more thereof.
and at least one primary amine,
preferably selected from the group which comprises mono-, di- and poly-amines, especially alkyl- or alkylene-(mono- or di-)amines, such as, for example: 2-methylpentanediamine, or 2,2,4- or 2,4,4-trimethylhexamethylenediamine,
heteroalkyl- or heteroalkylene-(mono- or di-)amines, such as, for example, 1,13-diamino-4,7,10-trioxatridecane, amine-functionalised polyoxyalkylenes [Jeffamines] or, for example: triethylenetetramine and/or higher homologues,
cycloalkyl- or cycloalkylene-(mono- or di-)amines, such as, for example: isophoronediamine, 1,3-bisaminomethylcyclohexane, TCD-diamine,
heterocycloalkyl- or heterocycloalkylene-(mono- or di-)amines, such as, for example: aminoethylpiperazine, aminols, such as, for example: 1,3-diaminopropan-2-ol, and
arylalkyl- or arylalkylene-(mono- or di-)amines, such as 1,3- or 1,4-benzenedimethanamine, and/or from the group of aminosilanised fillers;
aminoamides, polyaminoamides, Mannich bases or amine adducts, such as epoxy-amine adducts, isocyanate-amine adducts, Bucherer adducts and Michael addition adducts;
aminoalkylsilanes which include at least one hydrolysable group, such as alkoxy, for example methoxy or ethoxy - bonded to the silicon, for example selected from the group which comprises one or more of the following compounds: aminoalkyl-tri- or -di-alkoxysilanes, such as 3-aminopropyl-trimethoxysilane or 3-aminopropyl-triethoxysilane, and N-(aminoalkyl)-amino-alkyl-tri- or-di-alkoxysilanes, such as N-(2-aminoethyl)-3-aminopropyl-trimethoxysilane or N-(2-aminoethyl)-3-aminopropylmethyldimethoxysilane, furthermore ureidoalkyltrimethoxysilanes, such as 3-ureidopropyltrimethoxysilane;
and aminosilanised fillers that carry primary amino groups, such as aminosilane-treated quartz powder, aminosilane-treated silica, or aminosilane-treated pyrogenic silicas,
and mixtures of two or more of the mentioned amines;
wherein the constituents aldehyde and/or ketone on the one hand and the constituent primary amine on the other hand are preferably divided separately between two components and are only provided for mixing when the hardener system is used for use in an adhesive, coating material or a moulding composition, especially in the fixing of anchoring means in (building) substrates.

7. Hardener system according to claim 1, wherein (a) the activator in the form of a metal salt is selected from one or more salts of organic and/or inorganic acids with metals, for example selected from those mentioned in claim 2, and as free-radical starter there is provided
b1) at least one aldehyde and/or ketone and at least one primary amine,
the aldehyde and/or ketone preferably being a compound which has at least one or more (primary and/or secondary) hydrogen atoms at the carbon atom in the α-position to the carbonyl group, for example propanal, valeraldehyde, isovaleraldehyde, methoxy-acetaldehyde, 3,7-dimethyl-6-octenal or 3,7-dimethyl-7-hydroxyoctanal, methyl isobutyl ketone, acetone or methyl ethyl ketone; or especially a compound which has only one (tertiary) hydrogen atom at the carbon atom in the α-position to the carbonyl group, for example isobutyraldehyde, 2-ethylhexanal, 2-methylbutanal, 2-ethylbutanal, 2-methylvaleraldehyde, 2,3-dimethylvaleraldehyde, cyclohexylcarboxaldehyde, 3,7-dimethyl-2,6-octadienal, 3-(4-tert-butylphenyl)-2-methylpropanal (Lilial, Lysmeral), tetrahydrofuran-3-carboxaldehyde, tetra-hydro-2-furancarboxaldehyde, 4-formyltetrahydropyran, tetrahydro-2H-pyran-2-carbaldehyde, tetrahydropyran-3-carbaldehyde, diisopropyl ketone, 3-methyl-2-pentanone, 2-methylcyclohexanone, β-ionones or 6-methyl-5-hepten-2-one; or mixtures of two or more thereof,
and the primary amines preferably being those selected from the group which comprises mono-, di- and poly-amines, especially alkyl- or alkylene-(mono- or di-)amines, such as, for example: 2-methylpentanediamine, or 2,2,4- or 2,4,4-trimethylhexamethylenediamine, heteroalkyl- or heteroalkylene-(mono- or di-)amines, such as, for example, 1,13-diamino-4,7,10-trioxatridecane, amine-functionalised polyoxyalkylenes [Jeffamines] or, for example: triethylenetetramine and/or higher homologues,
cycloalkyl- or cycloalkylene-(mono- or di-)amines, such as, for example: isophoronediamine, 1,3-bisaminomethylcyclohexane, TCD-diamine,
heterocycloalkyl- or heterocycloalkylene-(mono- or di-)amines, such as, for example, aminoethylpiperazine, aminols, such as, for example, 1,3-diaminopropan-2-ol, and arylalkyl- or arylalkylene-(mono- or di-)amines, such as 1,3- or 1,4-benzenedimethanamine, and/or from the group of aminosilanised fillers;
aminoamides, polyaminoamides, Mannich bases or amine adducts, such as epoxy-amine adducts, isocyanate-amine adducts, Bucherer adducts and Michael addition adducts; aminoalkylsilanes which include at least one hydrolysable group, such as alkoxy, for example methoxy or ethoxy - bonded to the silicon, for example selected from the group which comprises one or more of the following compounds: aminoalkyl-tri- or -di-alkoxysilanes, such as 3-aminopropyl-trimethoxysilane or 3-aminopropyl-triethoxysilane, and N-(aminoalkyl)-amino-alkyl-tri- or-di-alkoxysilanes, such as N-(2-aminoethyl)-3-aminopropyl-trimethoxysilane or N-(2-aminoethyl)-3-aminopropylmethyldimethoxysilane, furthermore ureidoalkyltrimethoxysilanes, such as 3-ureidopropyltrimethoxysilane;
and aminosilanised fillers that carry primary amino groups, such as aminosilane-treated quartz powder, aminosilane-treated silica, or aminosilane-treated pyrogenic silicas;
and mixtures of two or more of the mentioned amines;
wherein the constituents aldehyde and/or ketone on the one hand and the constituent primary amine on the other hand are preferably divided separately between two components and are only provided for mixing when the hardener system is used for use in an adhesive, coating material or a moulding composition, especially in the fixing of anchoring means in (building) substrates,
and/or comprises
b2) an imine which includes one or more imine structural increments of the formula (I) shown in claim 1, especially obtainable by reaction of at least one aldehyde and/or ketone with at least one primary amine,
the aldehyde and/or ketone preferably being a compound which has at least one or more (primary and/or secondary) hydrogen atoms at the carbon atom in the α-position to the carbonyl group, for example propanal, valeraldehyde, isovaleraldehyde, methoxyacet-aldehyde, 3,7-dimethyl-6-octenal or 3,7-dimethyl-7-hydroxyoctanal, methyl isobutyl ketone, acetone or methyl ethyl ketone; or especially a compound which has only one hydrogen atom at the carbon atom in the α-position to the carbonyl group, for example isobutyraldehyde, 2-ethylhexanal, 2-methylbutanal, 2-ethylbutanal, 2-methylvaleraldehyde, 2,3-dimethylvaleraldehyde, cyclohexylcarboxaldehyde, 3,7-dimethyl-2,6-octadienal, 3-(4-tert-butylphenyl)-2-methylpropanal, tetrahydrofuran-3-carboxaldehyde, tetrahydro-2-furancarb-oxaldehyde, 4-formyltetrahydropyran, tetrahydro-2H-pyran-2-carbaldehyde, tetrahydropyran-3-carbaldehyde, diisopropyl ketone, 3-methyl-2-pentanone, 2-methylcyclohexanone, β-ionones or 6-methyl-5-hepten-2-one; or mixtures of two or more thereof,
and the primary amines preferably being those selected from the group which comprises mono-, di- and poly-amines, especially
alkyl- or alkylene-(mono- or di-)amines, such as, for example: 2-methylpentanediamine, or 2,2,4- or 2,4,4-trimethylhexamethylenediamine, heteroalkyl- or heteroalkylene-(mono- or di-)amines, such as, for example, 1,13-diamino-4,7,10-trioxatridecane, amine-functionalised polyoxyalkylenes [Jeffamines] or, for example: triethylenetetramine and/or higher homologues,
cycloalkyl- or cycloalkylene-(mono- or di-)amines, such as, for example: isophoronediamine, 1,3-bisaminomethylcyclohexane, TCD-diamine,
heterocycloalkyl- or heterocycloalkylene-(mono- or di-)amines, such as, for example: aminoethylpiperazine, aminols, such as, for example, 1,3-diaminopropan-2-ol, and
arylalkyl- or arylalkylene-(mono- or di-)amines, such as 1,3- or 1,4-benzenedimethanamine, and/or from the group of aminosilanised fillers;
aminoamides, polyaminoamides, Mannich bases or amine adducts, such as epoxy-amine adducts, isocyanate-amine adducts, Bucherer adducts and Michael addition adducts; aminoalkylsilanes which include at least one hydrolysable group, such as alkoxy, for example methoxy or ethoxy - bonded to the silicon, for example selected from the group which comprises one or more of the following compounds: aminoalkyl-tri- or -di-alkoxysilanes, such as 3-aminopropyl-trimethoxysilane or 3-aminopropyl-triethoxysilane, and N-(aminoalkyl)-amino-alkyl-tri- or-di-alkoxysilanes, such as N-(2-aminoethyl)-3-aminopropyl-trimethoxysilane or N-(2-aminoethyl)-3-aminopropylmethyldimethoxysilane, furthermore ureidoalkyltrimethoxysilanes, such as 3-ureidopropyltrimethoxysilane;
and aminosilanised fillers that carry primary amino groups, such as aminosilane-treated quartz powder, aminosilane-treated silica, or aminosilane-treated pyrogenic silicas;
and mixtures of two or more of the mentioned amines.

8. Use of a hardener system according to any one of claims 1 to 7 as initiator system for a synthetic resin composition having free-radical-polymerisable compounds, which further includes as constituent
c) at least one free-radical-polymerisable compound.

9. Use according to claim 8, wherein as at least one free-radical-polymerisable compound there is provided a free-radical-hardening unsaturated reactive resin with preferably at least 2 or more reactive non-aromatic unsaturated bonds, or a mixture of two or more reactive resins; especially from the group of ethylenically unsaturated compounds which comprises styrene and derivatives, vinyl esters, such as (meth)acrylates or urethane (meth)acrylates or itaconates, furthermore unsaturated polyesters, vinyl ethers, allyl ethers, dicyclopentadiene compounds and unsaturated fats; especially one or more reactive resins which comprise (free-radical-)hardenable esters with one or more unsaturated carboxylic acid radicals; preferably in each case propoxylated or especially ethoxylated aromatic diol-, such as bisphenol-A-, bisphenol-F- or novolak-(especially di-)(meth)acrylates; epoxy(meth)acrylates, especially in the form of reaction products of di- or poly-epoxides, for example bisphenol-A-, bisphenol-For novolak-di- and/or -poly-glycidyl ethers, with unsaturated carboxylic acids, for example C₂-C₇alkenecarboxylic acids, such as especially (meth)acrylic acid; urethane- and/or urea-(meth)acrylates, which also includes oligomeric or polymeric variants; or unsaturated polyester resins, or the like, or two or more of such hardenable unsaturated organic components.

10. Synthetic resin composition, including the constituents
a) at least one activator in the form of a metal salt as included in any one of claims 1 to 4, as free-radical chain starter
b1) at least one aldehyde and/or ketone and a primary amine as mentioned in any one of claims 1, 4, 6 and 7 or
b2) at least one ketimine or especially aldimine as included in any one of claims 1 to 5; and
c) at least one free-radical-polymerisable compound as defined in claim 6 or 9.

11. Synthetic resin composition according to claim 10, wherein as free-radical chain starter b2) there is provided at least one ketimine or especially aldimine as included in any one of claims 1 to 3, in claim 5 or in claim 6.

12. Synthetic resin composition according to claim 10, wherein as free-radical chain starter b1) there are provided at least one aldehyde and/or ketone and a primary amine as mentioned in any one of claims 1, 2, 4, 6 and 7, especially as mentioned in claim 6.

13. Synthetic resin composition according to claim 10 or 11, **characterised in that** (a) the activator in the form of a metal salt is selected from one or more salts of organic and/or inorganic acids with metals, for example selected from copper, iron, vanadium, manganese, cerium, cobalt, zirconium, or bismuth, or mixtures of two or more thereof, especially selected from vanadium, iron, manganese and copper, especially in the form of salts or complexes with inorganic acid radicals, such as sulfate and/or carbonate radicals and/or organic acid radicals, for example carboxylate radicals, - the organic acids preferably being saturated - such as carboxylates with CH₃, C₂-C₂₀alkyl, a C₆-C₂₄aryl radical or C₇-C₃₀aralkyl radical, for example octoate, for example 2-ethyl hexanoate (isooctanoate), neodecanoate, or acetylacetonate; with special preference being given to manganese carboxylates, such as Mn acetate or Mn octoate, copper carboxylates, such as copper octoate or copper naphthenate, copper quinolates, iron carboxylates, such as iron octoate and/or vanadium carboxylates and/or the group of metal salts with inorganic acids which comprises, for example, iron chloride, iron sulfate, copper sulfate and copper chloride;
and/or
the free-radical starter b2) comprises at least one aldimine or ketimine, selected from the group obtainable by condensation, with removal of water, of the mono-, di- or poly-amines mentioned in claim 2
with one or more aldehydes or ketones of the formula (II), 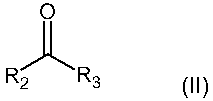 as defined in claim 2.

14. Synthetic resin composition according to claim 10, wherein
(a) the activator in the form of a metal salt is selected from one or more salts of organic and/or inorganic acids with metals, for example selected from those mentioned in claim 13;
and/or
b1) as free-radical starter there are provided and included at least one of those mentioned in claim 2 and/or at least one aldehyde and/or ketone and as primary amine one or more aminosilanised fillers that carry primary amino groups, such as aminosilane-treated quartz powder (for example Silbond AST® from Quarzwerke GmbH), aminosilane-treated silica (for example Aktisil AM® from Hoffmann Mineral), or aminosilane-treated pyrogenic silicas.

15. Synthetic resin composition according to any one of claims 10 to 14 in the form of a multicomponent system or kit.

16. Use of a synthetic resin composition according to any one of claims 10 to 15 as an adhesive, coating material or moulding composition.

17. Use of a synthetic resin composition according to any one of claims 10 to 14 for the fixing of anchoring means in building substrates.

18. Process or method for fixing anchoring means in holes or crevices, wherein a synthetic resin composition according to any one of claims 10 to 14 and an anchoring means are introduced in succession or simultaneously into a hole or a crevice in a building substrate, or, for the fixing of fibres, non-crimp fabrics, woven fabrics or composites for reinforcing built structures, wherein a synthetic resin composition according to any one of claims 10 to 14 is used as fixing means.

## Revendications

1. Système durcisseur pour une composition de résine synthétique, qui comporte des composés polymérisables par voie radicalaire, comprenant les constituants suivants :
a) au moins un activateur sous forme d'un sel métallique et comme initiateur radicalaire
b1) au moins un aldéhyde et/ou une cétone et au moins une amine primaire et/ou
b2) une imine, qui comporte un ou plusieurs incréments de structure imine de formule (I) : 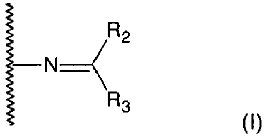 dans laquelle, indépendamment l'un de l'autre : la ligne ondulée représente le radical organique de l'amine utilisée ou représente hydrogène ; et R₂ et R₃ représentent, indépendamment l'un de l'autre, hydrogène et/ou un radical organique non substitué ou substitué, présentant le cas échéant des doubles liaisons et/ou des hétéroatomes, monoramifié ou polyramifié ou linéaire, qui comporte au moins une structure moléculaire aliphatique, hétéroaliphatique, alicyclique ou hétérocyclique ou une combinaison de deux, ou plus, des structures moléculaires susmentionnées et/ou des sels correspondants.

2. Système durcisseur selon la revendication 1, dans lequel (a) l'activateur sous forme d'un sel métallique est choisi parmi un ou plusieurs sels d'acides organiques et/ou inorganiques avec des métaux, par exemple choisis parmi le cuivre, le fer, le vanadium, le manganèse, le cérium, le cobalt, le zirconium ou le bismuth ou les mélanges de deux, ou plus, de ceux-ci, en particulier choisis parmi le vanadium, le fer, le manganèse et le cuivre, en particulier sous forme de sels ou de complexes avec des radicaux d'acides inorganiques, tels que les radicaux sulfate et/ou carbonate et/ou avec des radicaux d'acides organiques, par exemple les radicaux carboxylate
- les acides organiques étant de préférence saturés - tels que les carboxylates présentant CH₃, C₂-C₂₀-alkyle, un radical C₆-C₂₄-aryle ou un radical C₇-C₃₀-aralkyle, par exemple octoate, par exemple 2-éthylhexanoate (isooctanoate), néodécanoate ou acétylacétonate ; les carboxylates de manganèse, tels que l'acétate de Mn ou l'octoate de Mn, les carboxylates de cuivre, tels que l'octoate de cuivre ou le naphténate de cuivre, les quinolates de cuivre, les carboxylates de fer, tels que l'octoate de fer et/ou les carboxylates de vanadium et/ou le groupe des sels métalliques avec des acides inorganiques, qui comprend par exemple le chlorure de fer, le sulfate de fer, le sulfate de cuivre et le chlorure de cuivre, étant particulièrement préférés ; et/ou
(b2) l'initiateur radicalaire comprend au moins une aldimine ou cétimine, choisie dans le groupe qui peuvent être obtenus par condensation avec dissociation d'eau d'une monoamine, d'une diamine ou d'une polyamine, choisie parmi les aminols, tels que les hydroxy(alkyle inférieur)amines, par exemple l'éthanolamine, la diéthanolamine, le 1,3-diaminopropan-2-ol ou le 3-aminopropanol, ou les aminols aromatiques, tels que le 2-aminophénol, le 3-aminophénol ou le 4-aminophénol ;
les alkyl/alkylène(mono ou di)amines, en particulier de formule R^{a}R^{b}N-E-(NR^{c}R^{d}), dans laquelle R^{a}, R^{b}, R^{c}, R^{d} signifient, indépendamment les uns des autres, H, des radicaux alkyle ou cycloalkyle et E signifie une chaîne alkylène linéaire ou ramifiée, saturée ou insaturée comprenant ≥ 2 atomes de carbone, comprenant par exemple au maximum 40 atomes de carbone, où, dans les monoamines sous forme d'alkylamines, le radical placé entre parenthèses est absent et H est présent à la place, de préférence l'aminobutane, le diaminoéthane, le diaminopropane ou d'autres homologues, tels que le 1,4-diaminobutane, le 1,5-diaminopentane et le 1,6-diaminohexane, la 2-méthyl-1,2-propanediamine, la 2,2,4-triméthylhexaméthylènediamine ou la 2,4,4-triméthylhexaméthylènediamine ;
les cycloalkyl/cycloalkylène (mono ou di) amines ou les hétérocycloalkyl/hétérocycloalkylène (mono ou di) amines, en particulier de formule R^{e}R^{f}N-G-(NR^{g}R^{h}), dans laquelle R^{e}, R^{f}, R^{g}, R^{h} signifient, indépendamment les uns des autres, H, alkyle ou cycloalkyle et G signifie un radical cycloalkyle/cycloalkylène ou hétérocycloalkyle/hétérocycloalkylène saturé ou insaturé comprenant ≥ 4 atomes de cycle et en particulier au maximum 10, par exemple au maximum 6 atomes de cycle, où, pour les monoamines sous forme de cycloalkylamines ou d'hétérocycloalkylamines, le radical placé entre parenthèses est absent et un H est présent à la place ; les cyclohexylamines, les diaminocyclohexanes, par exemple la 1,4-cyclohexanediamine ; la 4,4'-méthylènebiscyclohexylamine ; l'isophoronediamine, la m-xylylènediamine, le 2,5(2,6)bis-(aminométhyl)-bicyclo[2.2.1]heptane (NBDA), l'octahydro-4,7-méthano-indène-1(2),5(6)-diméthanamine (TCD-diamine), le 1,2-bis(aminométhyl)cyclohexane, le 1,4-bis(aminométhyl)cyclohexane ou en particulier le 1,3-bis(aminométhyl)cyclohexane, ou, pour les composés hétérocycloalkyle, l'aminoéthylpipérazine, étant préférés ;
les amines polyfonctionnelles, en particulier les polyoxyalkylènes fonctionnalisés par amino, tels que le 2-bis-(aminoéthoxy)-éthane ; ou le 1,13-diamino-4,7,10-trioxatridécane ;
les composés de formule H₂N-(CH₂)ᵢ-NH-[(CH₂)ⱼ-NH]ₖ-(CH₂)₁-NH₂, dans laquelle i, j et l représentent, indépendamment les uns des autres, 2 à 4 et k représente 0, 1, 2, 3 ou 4, comme par exemple la diéthylènetriamine, la triéthylènetétraamine, la tétraéthylènepentaamine et d'autres homologues, la dipropylènetriamine, la bis-(3-aminopropyl)-amine ; les aminoamides, les polyaminoamides, les bases de Mannich ou les produits d'addition d'amine ou
les aminoalkylsilanes, qui comportent au moins un, de préférence deux, groupes hydrolysables, tels qu'alcoxy, par exemple méthoxy ou éthoxy - liés au silicium - par exemple choisis dans le groupe qui comprend un ou plusieurs des composés suivants : les aminoalkyltrialcoxysilanes ou les aminoalkyldialcoxysilanes, tels que le 3-aminopropyltriméthoxysilane ou le 3-aminopropyltriéthoxysilane, et les N-(aminoalkyl)-aminoalkyltrialcoxysilanes ou les N-(aminoalkyl)-aminoalkyldialcoxysilanes, tels que le N-(2-aminoéthyl)-3-aminopropyltriméthoxysilane ou le N-(2-aminoéthyl)-3-aminopropylméthyldiméthoxysilane, en outre les uréidoalkyltriméthoxysilanes, tels que le 3-uréidopropyltriméthoxysilane ;
ainsi que les mélanges de deux, ou plus, de ceux-ci ;
avec un(e) ou plusieurs aldéhydes ou cétones de formule (II) 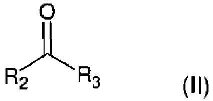 dans laquelle :
R₂, R₃ représentent, indépendamment l'un de l'autre, hydrogène et/ou un radical organique non substitué ou substitué et/ou présentant le cas échéant des hétéroatomes, monoramifié ou polyramifié ou linéaire, qui comporte au moins une structure moléculaire aliphatique, hétéroaliphatique, alicyclique ou hétérocyclique ou une combinaison de deux, ou plus, des structures moléculaires susmentionnées ;
les aldéhydes et/ou les cétones étant de préférence des composés qui présentent au moins un ou plusieurs atomes d'hydrogène (primaire et/ou secondaire) sur l'atome de carbone en position α par rapport au groupe carbonyle, par exemple le propanal, le valéraldéhyde, l'isovaléraldéhyde, le méthoxyacétaldéhyde, la méthylisobutylcétone, l'acétone ou la méthyléthylcétone ; ou en particulier des composés, qui ne présentent qu'un atome d'hydrogène (tertiaire) sur l'atome de carbone en position α par rapport au groupe carbonyle, par exemple l'isobutyraldéhyde, le 2-éthylhexanal, le 2-méthylbutanal, le 2-éthylbutanal, le 2-méthylvaléraldéhyde, le 2,3-diméthylvaléraldéhyde, le cyclohexylcarboxaldéhyde ou très préférablement la diisopropylcétone, la 3-méthyl-2-pentanone ou la 2-méthylcyclohexanone ; ou les mélanges de deux, ou plus, de ceux-ci.

3. Système durcisseur selon l'une quelconque des revendications 1 ou 2, seule une ou plusieurs aldimine(s) étant prévue(s) comme initiateur radicalaire dans b2), et aucune cétimine n'étant prévue.

4. Système durcisseur selon la revendication 1, dans lequel (a) l'activateur sous forme d'un sel métallique est choisi parmi un ou plusieurs sels d'acides organiques et/ou inorganiques avec des métaux, par exemple choisis parmi
le cuivre, le fer, le vanadium, le manganèse, le cérium, le cobalt, le zirconium ou le bismuth ou les mélanges de deux, ou plus, de ceux-ci, en particulier choisis parmi le vanadium, le fer, le manganèse et le cuivre, en particulier sous forme de sels ou de complexes avec des radicaux d'acides inorganiques, tels que les radicaux sulfate et/ou carbonate et/ou avec des radicaux d'acides organiques, par exemple les radicaux carboxylate - les acides organiques étant de préférence saturés - tels que les carboxylates présentant CH₃, C₂-C₂₀-alkyle, un radical C₆-C₂₄-aryle ou C₇-C₃₀-aralkyle, par exemple octoate, par exemple 2-éthylhexanoate (isooctanoate), néodécanoate ou acétylacétonate ; les carboxylates de manganèse, tels que l'acétate de Mn ou l'octoate de Mn, les carboxylates de cuivre, tels que l'octoate de cuivre ou le naphténate de cuivre, les quinolates de cuivre, les carboxylates de fer, tels que l'octoate de fer et/ou les carboxylates de vanadium et/ou le groupe des sels métalliques avec des acides inorganiques, qui comprend par exemple le chlorure de fer, le sulfate de fer, le sulfate de cuivre et le chlorure de cuivre, étant particulièrement préférés ; et/ou
b2) comme initiateurs radicalaires, au moins l'un de ceux mentionnés dans la revendication 2 et/ou au moins un aldéhyde et/ou au moins une cétone et, comme amine primaire, une ou plusieurs charges aminosilanisées, qui portent des groupes amino primaire, telles que la farine de quartz traitée par aminosilane ou les silices pyrogènes traitées par aminosilane, sont prévus et compris.

5. Système durcisseur selon l'une quelconque des revendications 1 ou 2 ou 3, une ou plusieurs aldimines, choisies parmi les produits de réaction d'isobutyraldéhyde et de 3-aminopropyltriméthoxysilane ; d'isobutyraldéhyde et de m-xylylènediamine ; d'isobutyraldéhyde et de 1,3-bis(aminométhyl)-cyclohexane ; d'isobutyraldéhyde et de Jeffamin D230 ; d'isobutyraldéhyde et d'isophoronediamine ; d'isobutyraldéhyde et de Jeffamin DER-148 ; d'isobutyraldéhyde et de diéthyltoluènediamine ; et d'isobutyraldéhyde et de cyclohexane-1,2-diamine ; ou des mélanges de deux, ou plus, de ces produits de réaction ; étant prévues comme initiateur radicalaire b2).

6. Système durcisseur selon l'une quelconque des revendications 1 à 5, dans lequel (a) l'activateur sous forme d'un sel métallique est prévu parmi un ou plusieurs sels d'acides organiques et/ou inorganiques avec des métaux, par exemple choisis parmi le cuivre, le fer, le vanadium, le manganèse, le cérium, le cobalt, le zirconium ou le bismuth ou les mélanges de deux, ou plus, de ceux-ci, en particulier choisis parmi le vanadium, le fer, le manganèse et le cuivre, en particulier sous forme de sels ou de complexes avec des radicaux d'acides inorganiques, tels que les radicaux sulfate et/ou carbonate et/ou avec des radicaux d'acides organiques, par exemple les radicaux carboxylate - les acides organiques étant de préférence saturés - tels que les carboxylates présentant CH₃, C₂-C₂₀-alkyle, un radical C₆-C₂₄-aryle ou un radical C₇-C₃₀-aralkyle, par exemple octoate, par exemple 2-éthylhexanoate (isooctanoate), néodécanoate ou acétylacétonate ; les carboxylates de manganèse, tels que l'acétate de Mn ou l'octoate de Mn, les carboxylates de cuivre, tels que l'octoate de cuivre ou le naphténate de cuivre, les quinolates de cuivre, les carboxylates de fer, tels que l'octoate de fer et/ou les carboxylates de vanadium et/ou le groupe des sels métalliques avec des acides inorganiques, qui comprend par exemple le chlorure de fer, le sulfate de fer, le sulfate de cuivre et le chlorure de cuivre, étant particulièrement préférés ; et/ou
(b1) l'initiateur radicalaire comprend au moins un aldéhyde ou au moins une cétone de formule (II) 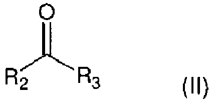 dans laquelle :
R₂, R₃ représentent, indépendamment l'un de l'autre, hydrogène et/ou un radical organique non substitué ou substitué et/ou présentant le cas échéant des hétéroatomes, monoramifié ou polyramifié ou linéaire, qui comporte au moins une structure moléculaire aliphatique, hétéroaliphatique, alicyclique ou hétérocyclique ou une combinaison de deux, ou plus, des structures moléculaires susmentionnées ;
les aldéhydes et/ou les cétones étant de préférence des composés qui présentent au moins un ou plusieurs atomes d'hydrogène (primaire et/ou secondaire) sur l'atome de carbone en position α par rapport au groupe carbonyle, par exemple le propanal, le valéraldéhyde, l'isovaléraldéhyde, le méthoxyacétaldéhyde, le 3,7-diméthyl-6-octénal ou le 3,7-diméthyl-7-hydroxyoctanal, la méthylisobutylcétone, l'acétone ou la méthyléthylcétone ; ou en particulier des composés, qui ne présentent qu'un atome d'hydrogène (tertiaire) sur l'atome de carbone en position α par rapport au groupe carbonyle, par exemple l'isobutyraldéhyde, le 2-éthylhexanal, le 2-méthylbutanal, le 2-éthylbutanal, le 2-méthylvaléraldéhyde, le 2,3-diméthylvaléraldéhyde, le cyclohexylcarboxaldéhyde, le 3,7-diméthyl-2,6-octadiénal, le 3-(4-tert-butylphényl)-2-méthylpropanal, le tétrahydrofuranne-3-carboxaldéhyde, le tétrahydro-2-furannecarboxaldéhyde, le 4-formyltétrahydropyrane, le tétrahydro-2H-pyrane-2-carbaldéhyde, le tétrahydropyrane-3-carbaldéhyde, la diisopropylcétone, la 3-méthyl-2-pentanone, la 2-méthylcyclohexanone, les β-ionones ou la 6-méthyl-5-heptén-2-one ; ou les mélanges de deux, ou plus, de ceux-ci, et au moins une amine primaire,
de préférence choisie dans le groupe qui comprend les monoamines, les diamines et les polyamines, en particulier les alkyl(mono ou di) amines ou les alkylène(mono ou di)amines, telles que par exemple : la 2-méthylpentanediamine, ou la 2,2,4-triméthylhexaméthylènediamine ou la 2,4,4-triméthylhexaméthylènediamine,
les hétéroalkyl(mono ou di) amines ou les hétéroalkylène(mono ou di) amines, telles que par exemple le 1,13-diamino-4,7,10-trioxatridécane, les polyoxyalkylènes fonctionnalisés par amine [Jeffamin] ou par exemple : la triéthylènetétraamine et/ou les homologues supérieurs,
les cycloalkyl (mono ou di) amines ou cycloalkylène(mono ou di)amines, telles que par exemple : l'isophoronediamine, le 1,3-bisaminométhylcyclohexane, la TCD-diamine,
les hétérocyloalkyl (mono ou di) amines ou hétérocycloalkylène (mono ou di) amines, telles que par exemple l'aminoéthylpipérazine,
les aminols tels que par exemple : le 1,3-diaminopropan-2-ol) et
les arylalkyl (mono ou di) amines ou les arylalkylène (mono ou di) amines, telles que la 1,3-benzènediméthanamine ou la 1,4-benzènediméthanamine et/ou du groupe des charges aminosilanisées ;
les aminoamides, les polyaminoamides, les bases de Mannich ou les produits d'addition d'amine, tels que les produits d'addition époxyde-amine, les produits d'addition isocyanate-amine, les produits d'addition de Bucherer et les produits d'addition de Michael ;
les aminoalkylsilanes, qui comportent au moins un groupe hydrolysable, tel qu'alcoxy, par exemple méthoxy ou éthoxy - lié au silicium - par exemple choisis dans le groupe qui comprend un ou plusieurs des composés suivants : les aminoalkyltrialcoxysilanes ou les aminoalkyldialcoxysilanes, tels que le 3-aminopropyltriméthoxysilane ou le 3-aminopropyltriéthoxysilane, et les N-(aminoalkyl)-aminoalkyltrialcoxysilanes ou les N-(aminoalkyl)-aminoalkyldialcoxysilanes, tels que le N-(2-aminoéthyl)-3-aminopropyltriméthoxysilane ou le N-(2-aminoéthyl)-3-aminopropylméthyldiméthoxysilane, en outre les uréidoalkyltriméthoxysilanes, tels que le 3-uréidopropyltriméthoxysilane ; et les charges aminosilanisées, qui portent des groupes amino primaire, telles que la farine de quartz traitée par aminosilane, les terres de silice traitées par aminosilane ou les silices pyrogènes traitées par aminosilane,
ainsi que les mélanges de deux, ou plus, des amines mentionnées ;
les constituants aldéhyde et/ou cétone d'une part et le constituant amine primaire d'autre part étant de préférence répartis séparément sur deux composants et n'étant destinés au mélange que lors de l'utilisation du système durcissable lors de l'utilisation dans un additif, un matériau de revêtement ou une masse de moulage, en particulier lors de la fixation de moyens d'ancrage dans des substrats (de construction).

7. Système durcisseur selon la revendication 1, dans lequel (a) l'activateur sous forme d'un sel métallique est choisi parmi un ou plusieurs sels d'acides organiques et/ou inorganiques avec des métaux, par exemple choisi parmi ceux mentionnés dans la revendication 2 et, comme initiateur radicalaire,
b1) au moins un aldéhyde et/ou une cétone et au moins une amine primaire sont prévus
l'aldéhyde et/ou la cétone étant de préférence un composé qui présente au moins un ou plusieurs atomes d'hydrogène (primaire et/ou secondaire) sur l'atome de carbone en position α par rapport au groupe carbonyle, par exemple le propanal, le valéraldéhyde, l'isovaléraldéhyde, le méthoxyacétaldéhyde, le 3,7-diméthyl-6-octénal ou le 3,7-diméthyl-7-hydroxyoctanal, la méthylisobutylcétone, l'acétone ou la méthyléthylcétone ; ou en particulier un composé, qui ne présente qu'un atome d'hydrogène (tertiaire) sur l'atome de carbone en position α par rapport au groupe carbonyle, par exemple l'isobutyraldéhyde, le 2-éthylhexanal, le 2-méthylbutanal, le 2-éthylbutanal, le 2-méthylvaléraldéhyde, le 2,3-diméthylvaléraldéhyde, le cyclohexylcarboxaldéhyde, le 3,7-diméthyl-2,6-octadiénal, le 3-(4-tert-butylphényl)-2-méthylpropanal (lilial, lysméral), le tétrahydrofuranne-3-carboxaldéhyde, le tétrahydro-2-furannecarboxaldéhyde, le 4-formyltétrahydropyrane, le tétrahydro-2H-pyrane-2-carbaldéhyde, le tétrahydropyrane-3-carbaldéhyde, la diisopropylcétone, la 3-méthyl-2-pentanone, la 2-méthylcyclohexanone, les β-ionones ou la 6-méthyl-5-heptén-2-one ; ou les mélanges de deux, ou plus, de ceux-ci,
les amines primaires étant de préférence celles qui sont choisies dans le groupe comprenant les monoamines, les diamines et les polyamines,
en particulier les alkyl(mono ou di) amines ou les alkylène(mono ou di) amines, telles que par exemple : la 2-méthylpentanediamine, ou la 2,2,4-triméthylhexaméthylènediamine ou la 2,4,4-triméthylhexaméthylènediamine,
les hétéroalkyl (mono ou di) amines ou les hétéroalkylène (mono ou di)amines, telles que par exemple le 1,13-diamino-4,7,10-trioxatridécane, les polyoxyalkylènes fonctionnalisés par amine [Jeffamin] ou par exemple : la triéthylènetétraamine et/ou les homologues supérieurs,
les cycloalkyl (mono ou di) amines ou cycloalkylène (mono ou di)amines, telles que par exemple : l'isophoronediamine, le 1,3-bisaminométhylcyclohexane, la TCD-diamine,
les hétérocyloalkyl (mono ou di) amines ou hétérocycloalkylène (mono ou di)amines, telles que par exemple l'aminoéthylpipérazine,
les aminols tels que par exemple : le 1,3-diaminopropan-2-ol) et
les arylalkyl (mono ou di) amines ou les arylalkylène (mono ou di)amines, telles que la 1,3-benzènediméthanamine ou la 1,4-benzènediméthanamine et/ou du groupe des charges aminosilanisées ;
les aminoamides, les polyaminoamides, les bases de Mannich ou les produits d'addition d'amine, tels que les produits d'addition époxyde-amine, les produits d'addition isocyanate-amine, les produits d'addition de Bucherer et les produits d'addition de Michael ;
les aminoalkylsilanes, qui comportent au moins un groupe hydrolysable, tel qu'alcoxy, par exemple méthoxy ou éthoxy - lié au silicium - par exemple choisis dans le groupe qui comprend un ou plusieurs des composés suivants : les aminoalkyltrialcoxysilanes ou les aminoalkyldialcoxysilanes, tels que le 3-aminopropyltriméthoxysilane ou le 3-aminopropyltriéthoxysilane, et les N-(aminoalkyl)-aminoalkyltrialcoxysilanes ou les N-(aminoalkyl)-aminoalkyldialcoxysilanes, tels que le N-(2-aminoéthyl)-3-aminopropyltriméthoxysilane ou le N-(2-aminoéthyl)-3-aminopropylméthyldiméthoxysilane, en outre les uréidoalkyltriméthoxysilanes, tels que le 3-uréidopropyltriméthoxysilane ;
et les charges aminosilanisées, qui portent des groupes amino primaire, telles que la farine de quartz traitée par aminosilane, les terres de silices traitées par aminosilane ou les silices pyrogènes traitées par aminosilane ;
ainsi que les mélanges de deux, ou plus, des amines mentionnées ;
les constituants aldéhyde et/ou cétone d'une part et le constituant amine primaire d'autre part étant de préférence répartis séparément sur deux composants et n'étant destinés au mélange que lors de l'utilisation du système durcissable lors de l'utilisation dans un additif, un matériau de revêtement ou une masse de moulage, en particulier lors de la fixation de moyens d'ancrage dans des substrats (de construction) et/ou
b2) une imine qui comporte un ou plusieurs incréments de structure imine de la formule (I) représentée dans la revendication 1, pouvant en particulier être obtenue par transformation d'au moins un aldéhyde et/ou d'au moins une cétone avec au moins une amine primaire,
l'aldéhyde et/ou la cétone étant de préférence un composé qui présente au moins un ou plusieurs atomes d'hydrogène (primaire et/ou secondaire) sur l'atome de carbone en position α par rapport au groupe carbonyle, par exemple le propanal, le valéraldéhyde, l'isovaléraldéhyde, le méthoxyacétaldéhyde, le 3,7-diméthyl-6-octénal ou le 3,7-diméthyl-7-hydroxyoctanal, la méthylisobutylcétone, l'acétone ou la méthyléthylcétone ; ou en particulier un composé, qui ne présente qu'un atome d'hydrogène (tertiaire) sur l'atome de carbone en position α par rapport au groupe carbonyle, par exemple l'isobutyraldéhyde, le 2-éthylhexanal, le 2-méthylbutanal, le 2-éthylbutanal, le 2-méthylvaléraldéhyde, le 2,3-diméthylvaléraldéhyde, le cyclohexylcarboxaldéhyde, le 3,7-diméthyl-2,6-octadiénal, le 3-(4-tert-butylphényl)-2-méthylpropanal, le tétrahydrofuranne-3-carboxaldéhyde, le tétrahydro-2-furannecarboxaldéhyde, le 4-formyltétrahydropyrane, le tétrahydro-2H-pyrane-2-carbaldéhyde, le tétrahydropyrane-3-carbaldéhyde, la diisopropylcétone, la 3-méthyl-2-pentanone, la 2-méthylcyclohexanone, les β-ionones ou la 6-méthyl-5-heptén-2-one ; ou les mélanges de deux, ou plus, de ceux-ci,
et les amines primaires étant de préférence celles qui sont choisies dans le groupe comprenant les monoamines, les diamines et les polyamines, en particulier les alkyl(mono ou di) amines ou les alkylène(mono ou di) amines, telles que par exemple : la 2-méthylpentanediamine, ou la 2,2,4-triméthylhexaméthylènediamine ou la 2,4,4-triméthylhexaméthylènediamine,
les hétéroalkyl (mono ou di) amines ou les hétéroalkylène (mono ou di) amines, telles que par exemple le 1,13-diamino-4,7,10-trioxatridécane, les polyoxyalkylènes fonctionnalisés par amine [Jeffamin] ou par exemple : la triéthylènetétraamine et/ou les homologues supérieurs,
les cycloalkyl (mono ou di) amines ou cycloalkylène (mono ou di) amines, telles que par exemple : l'isophoronediamine, le 1,3-bisaminométhylcyclohexane, la TCD-diamine,
les hétérocyloalkyl (mono ou di) amines ou hétérocycloalkylène (mono ou di) amines, telles que par exemple l'aminoéthylpipérazine,
les aminols tels que par exemple : le 1,3-diaminopropan-2-ol) et
les arylalkyl (mono ou di) amines ou les arylalkylène (mono ou di) amines, telles que la 1,3-benzènediméthanamine ou la 1,4-benzènediméthanamine et/ou du groupe des charges aminosilanisées ;
les aminoamides, les polyaminoamides, les bases de Mannich ou les produits d'addition d'amine, tels que les produits d'addition époxyde-amine, les produits d'addition isocyanate-amine, les produits d'addition de Bucherer et les produits d'addition de Michael ;
les aminoalkylsilanes, qui comportent au moins un groupe hydrolysable, tel qu'alcoxy, par exemple méthoxy ou éthoxy - lié au silicium - par exemple choisis dans le groupe qui comprend un ou plusieurs des composés suivants : les aminoalkyltrialcoxysilanes ou les aminoalkyldialcoxysilanes, tels que le 3-aminopropyltriméthoxysilane ou le 3-aminopropyltriéthoxysilane, et les N-(aminoalkyl)-aminoalkyltrialcoxysilanes ou les N-(aminoalkyl)-aminoalkyldialcoxysilanes, tels que le N-(2-aminoéthyl)-3-aminopropyltriméthoxysilane ou le N-(2-aminoéthyl)-3-aminopropylméthyldiméthoxysilane, en outre les uréidoalkyltriméthoxysilanes, tels que le 3-uréidopropyltriméthoxysilane ;
et les charges aminosilanisées, qui portent des groupes amino primaire, telles que la farine de quartz traitée par aminosilane, les terres de silices traitées par aminosilane ou les silices pyrogènes traitées par aminosilane ;
ainsi que les mélanges de deux, ou plus, des amines mentionnées.

8. Utilisation d'un système durcisseur selon l'une quelconque des revendications 1 à 7 comme système initiateur pour une composition de résine synthétique présentant des composés polymérisables par voie radicalaire, qui comporte en outre comme constituant c) au moins un composé polymérisable par voie radicalaire.

9. Utilisation selon la revendication 8, une résine réactive insaturée durcissant par voie radicalaire présentant de préférence au moins 2, ou plus, liaisons insaturées non aromatiques réactives ou un mélange de deux, ou plus, résines réactives étant prévu(e) comme au moins un composé polymérisable par voie radicalaire ; en particulier du groupe des composés éthyléniquement insaturés, qui comprennent le styrène et des dérivés, les esters de vinyle, tels que les (méth) acrylates ou les (méth)-acrylates d'uréthane ou les itaconates, en outre les polyester insaturés, les vinyléthers, les allyléthers, les composés dicyclopentadiéniques et les graisses insaturées ; en particulier une ou plusieurs résines réactives qui comprennent des esters durcissables (par voie radicalaire) présentant un ou plusieurs radicaux d'acides carboxyliques insaturés ; de préférence les (méth)acrylates (en particulier les di(méth)acrylates) de diols aromatiques, à chaque fois propoxylés ou en particulier éthoxylés, tels que le bisphénol-A, le bisphénol-F ou la novolaque ; les époxy(méth)acrylates, en particulier sous forme de produits de transformation de diépoxydes ou de polyépoxydes, par exemple les diglycidyléthers et/ou les polyglycidyléthers de bisphénol-A, de bisphénol-F ou de novolaque avec des acides carboxyliques insaturés, par exemple des acides C₂-C₇-alcènecarboxyliques, tels qu'en particulier l'acide (méth)acrylique ; les (méth)acrylates d'uréthane et/ou d'urée, qui comprennent également les variantes oligomères ou polymères ; ou les résines de polyester insaturé, ou analogues, ou deux, ou plus, de ces composants organiques insaturés durcissables.

10. Composition de résine synthétique, comprenant les constituants
a) au moins un activateur sous forme d'un sel métallique selon l'une quelconque des revendications 1 à 4 comme initiateur de chaîne radicalaire
b1) au moins un aldéhyde et/ou une cétone et au moins une amine primaire tels que mentionnés dans l'une quelconque des revendications 1, 4, 6 ou 7 ou
b2) au moins une cétimine ou en particulier au moins une aldimine selon l'une quelconque des revendications 1 à 5 ; et
c) au moins un composé polymérisable par voie radicalaire, tel que défini dans la revendication 6 ou 9.

11. Composition de résine synthétique selon la revendication 10, au moins une cétimine ou en particulier au moins une aldimine selon l'une quelconque des revendications 1 à 3, la revendication 5 ou la revendication 6 étant prévue comme initiateur de chaîne radicalaire b2).

12. Composition de résine synthétique selon la revendication 10, au moins un aldéhyde et/ou au moins une cétone et une amine primaire, tels que mentionnés dans l'une quelconque des revendications 1, 2, 4, 6 ou 7, en particulier dans la revendication 6, étant prévus comme initiateur de chaîne radicalaire b1).

13. Composition de résine synthétique selon la revendication 10 ou 11, **caractérisée en ce que** (a) l'activateur sous forme d'un sel métallique est choisi parmi un ou plusieurs sels d'acides organiques et/ou inorganiques avec des métaux, par exemple choisis parmi le cuivre, le fer, le vanadium, le manganèse, le cérium, le cobalt, le zirconium ou le bismuth ou les mélanges de deux, ou plus, de ceux-ci, en particulier choisis parmi le vanadium, le fer, le manganèse et le cuivre, en particulier sous forme de sels ou de complexes avec des radicaux d'acides inorganiques, tels que les radicaux sulfate et/ou carbonate et/ou avec des radicaux d'acides organiques, par exemple les radicaux carboxylate - les acides organiques étant de préférence saturés - tels que les carboxylates présentant CH₃, C₂-C₂₀-alkyle, un radical C₆-C₂₄-aryle ou un radical C₇-C₃₀-aralkyle, par exemple octoate, par exemple 2-éthylhexanoate (isooctanoate), néodécanoate ou acétylacétonate ; les carboxylates de manganèse, tels que l'acétate de Mn ou l'octoate de Mn, les carboxylates de cuivre, tels que l'octoate de cuivre ou le naphténate de cuivre, les quinolates de cuivre, les carboxylates de fer, tels que l'octoate de fer et/ou les carboxylates de vanadium et/ou le groupe des sels métalliques avec des acides inorganiques, qui comprend par exemple le chlorure de fer, le sulfate de fer, le sulfate de cuivre et le chlorure de cuivre, étant particulièrement préférés ; et/ou
l'initiateur radicalaire b2) comprend au moins une aldimine ou au moins une cétimine, choisie dans le groupe qui peuvent être obtenus par condensation avec dissociation d'eau des monoamines, diamines ou polyamines mentionnées dans la revendication 2 avec un ou plusieurs aldéhydes ou une ou plusieurs cétones de formule (II), 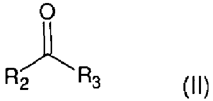 tels que définis comme dans la revendication 2.

14. Composition de résine synthétique selon la revendication 10, dans laquelle
(a) l'activateur sous forme d'un sel métallique est choisi parmi un ou plusieurs sels d'acides organiques et/ou inorganiques avec des métaux, par exemple choisi parmi ceux mentionnés dans la revendication 13 et/ou
b1) comme initiateurs radicalaires, au moins l'un de ceux mentionnés dans la revendication 2 et/ou au moins un aldéhyde et/ou au moins une cétone et, comme amine primaire, une ou plusieurs charges aminosilanisées, qui portent des groupes amino primaire, telles que la farine de quartz traitée par aminosilane (par exemple Silbond AST® de la société Quarzwerke GmbH) ou les terres de silice traitées par aminosilane (par exemple Aktisil AM® de la société Hoffmann Mineral) ou les silices pyrogènes traitées par aminosilane, sont prévus et compris.

15. Composition de résine synthétique selon l'une quelconque des revendications 10 à 14 sous forme d'un système ou d'un kit à plusieurs composants.

16. Utilisation d'une composition de résine synthétique selon l'une quelconque des revendications 10 à 15 comme adhésif, matériau de revêtement ou masse de moulage.

17. Utilisation d'une composition de résine synthétique selon l'une quelconque des revendications 10 à 14 pour la fixation de moyens d'ancrage dans des substrats de construction.

18. Procédé ou méthode pour fixer des moyens d'ancrage dans des trous ou des fentes, une composition de résine synthétique selon l'une quelconque revendication 10 à 14 et un moyen d'ancrage étant introduits successivement ou simultanément dans un trou ou dans une fente dans un substrat de construction, ou pour fixer des fibres, des mats, des tissus ou des composites pour le renforcement de constructions, dans lequel/laquelle une composition de résine synthétique selon l'une quelconque des revendications 10 à 14 est utilisée comme moyen de fixation.
